# EUROPEAN PATENT SPECIFICATION

(11) **EP 3 634 742 B1**
(45) Date of publication and mention of the grant of the patent: **25.05.2022**
(21) Application number: 18733368.7
(22) Date of filing: 02.05.2018
(51) Int. Cl.: B32B 7/12, B32B 15/04, B32B 15/085, B32B 15/18, B32B 15/20, B32B 27/08, B32B 27/32, B32B 27/34, B32B 38/00, B29C 45/14

(54) **POLYMER METAL HYBRID ARTICLES**
POLYMERMETALL-HYBRIDARTIKEL
ARTICLES HYBRIDES POLYMÈRE-MÉTAL

(30) Priority: 11.05.2017 US 201762504574 P
(43) Date of publication of application: 15.04.2020
(73) Proprietor: DUPONT POLYMERS, INC., Wilmington DE 19805 (US)
(72) Inventor: KANE, Paul, J., Bloomfield Hills, MI 48301 (US); COY, Robert, A., Sydenham, ON K0H 2T0 (CA)
(74) Representative: Heinemann, Monica
(86) International application number: PCT/US2018/030641
(87) International publication number: WO 2018/208554

(56) References cited:
- US-A1- 2011 027 583
- US-A1- 2012 094 133
- US-A1- 2013 264 741

## Description

### OVERVIEW

Described herein are polymer-metal hybrid articles, overmolded polymer-metal hybrid articles, materials used to prepare these polymer-metal hybrid articles, and improved processes for preparing these articles. Particularly it relates to the field of stamped polymer-metal hybrid articles comprising a surface layer A, a thermoplastic adhesive layer B, a metal layer C, in an A/B/C structure. The polymer-metal hybrid articles may be overmolded.

Polymer-metal hybrid (PMH) articles are much lighter than identical parts prepared from metal and have comparable mechanical performance to the metal counterparts. As a result, PMH articles are increasingly being used as replacements for metal parts to reduce weight in highly demanding applications, such as for example structural parts in automotive and aerospace applications. By combining plastic and metal together, manufactures are provided with new design capabilities, part integration possibilities, and overall light-weighting. Traditional PMH articles are prepared by overmolding of the metal component in which the overmolded polymer is typically attached to the metal component by mechanical interlocking.

US patent No. 5,190,803 discloses overmolded PMH articles in which the metal and plastic are mechanically interlocked to provide the final overmolded article.

US patent application No. 2016/0243794 discloses surface treated metal sheets consisting of a laminate having a metal substrate, a chemical conversion coating film and an adhesive layer in order wherein the chemical conversion coating film contains colloidal silica and a thermosetting polymer.

US patent application No. 2013/0264741 discloses laminated adhesive films which include a laminate of a tacky adhesive film containing a modified polyolefin polymer and an unmodified tacky thermoplastic polymer film.

The general technical background of the invention also includes US 2012/094133 A1.

It would be desirable to prepare PMH articles in which the overmolded polymer is attached to the PMH article by chemical bonding or a combination of chemical bonding and mechanical bonding and which exhibit significantly improved physical properties, especially after environmental exposure, such as flexural modulus and lap shear strength compared to traditional, mechanical interlocking only, PMH's.

It has now been discovered that PMH articles can be prepared which provide desirable adhesion between the various layers as well as improved adhesion between an overmolded polymer and the PMH article. The use of specific adhesive layers in the PMH article allows for strong adhesion between the PMH article and the overmolded polymer. Additionally, overmolded PMH articles can be manufactured using the PMH articles without undesirable mold deposit formation.

### DETAILED DESCRIPTION OF THE INVENTION

### Abbreviations

The claims and description herein are to be interpreted using the abbreviations and definitions set forth below.
"h", "hrs" refers to hours.
"%" refers to the term percent.
"wt %" refers to weight percent.
"parts" refers to parts by weight.
"g" refers to grams
"mol %" refers to mole percent
"mil" or "mils" refers to thousandths of an inch. 1 mil is 0.001 inches
"cc" refers to cubic centimeter
"min" refers to minutes
"kg" refers to kilogram
"mp" refers to melting point

### Definitions

As used herein, the article "a" refers to one as well as more than one and does not necessarily limit its referent noun to the grammatical category of singular number.

As used herein, the term "nonfunctionalized thermoplastic polyolefin" refers to polyolefins which do not comprise carboxyl functional groups such as acid or anhydride functional groups.

As used herein, the term "flexural modulus" refers to test values obtained on an overmolded polymer-metal hybrid test sample according to ISO 178. The polymer-metal hybrid test sample has an A/B/C structure which has been overmolded onto surface layer A.

As used herein, the term "spring constant" refers to the bending stiffness of PMH or overmolded PMH articles and is calculated from a 3 point bending formula using data obtained from testing the samples using ISO 178 test method.

As used herein, the term "initial flexural modulus" refers to test values obtained on an overmolded polymer-metal hybrid test sample according to ISO 178 and before any thermal cycling (zero thermal cycles), humidity exposure (0 hrs.), or any other environmental exposure. The polymer-metal hybrid test sample has an A/B/C structure which has been overmolded onto surface layer A.

As used herein, the terms "lap shear" and "lap shear strength" refer to test values obtained according to ASTM D3163. This test determines the interfacial adhesion or joint strength between two layers of materials. When multiple layers are present, such as 3 layers, test values represent the weakest adhesion value or joint strength between the various layers.

As used herein, the terms "initial lap shear" and "initial adhesion" refer to the interfacial adhesion between at least two layers of materials as formed before exposure to any environmental conditioning tests such as long term humidity exposure and/or elevated temperature cycles.

As used herein, the term "functionalized thermoplastic polyolefin" refers to polyolefins which comprise carboxyl functional groups such as acid or anhydride functional groups.

As used herein, the term "A/B/C structure" refers to a laminated structure or multilayer film comprising a surface layer A, a thermoplastic adhesive layer B, and a metal layer C in the order defined herein. Layer B is between layers A and C.

As used herein, the term "Aluminum/B/Aluminum structure" refers to a laminated structure in which a thermoplastic adhesive layer B is sandwiched between two aluminum layers.

As used herein, the term "carboxyl functional group" refers to carboxylic acid and anhydride groups. The concentration of carboxyl functional groups in the functionalized polyolefins is measured according to ASTM E168.

### Generally

Described herein are novel PMH articles having an A/B/C structure in which layer A is a surface layer, layer B is a thermoplastic adhesive layer, and layer C is a metal layer. When the PMH article is overmolded with a polyamide polymer onto surface layer A, in which surface layer A also comprises a polyamide polymer, the resulting overmolded PMH article exhibits improved properties such as initial adhesion, high temperature adhesion, moisture resistance, and thermal stability.

When PMH articles are overmolded with a polyamide polymer onto surface layer A, in which surface layer A also comprises a polyamide polymer, the resulting overmolded PMH article exhibits an initial adhesion of at least 11.5 MPa when measured at 23 °C according to ASTM D3163. When the PMH article is overmolded with a polypropylene polymer onto surface layer A which also comprises a polypropylene polymer, the resulting overmolded PMH article exhibits an initial adhesion of at least 5 MPa when measured at 23 °C according to ASTM D3163.

When the PMH article is overmolded with a polyamide polymer onto surface layer A, in which surface layer A also comprises a polyamide polymer, the resulting overmolded PMH article exhibits a high temperature adhesion of at least 5.5 MPa when measured at 85 °C according to ASTM D3163.

When the PMH article is overmolded with a polyamide polymer onto surface layer A, in which surface layer A also comprises a polyamide polymer, the resulting overmolded PMH article exhibits a moisture resistance, as determined by lap shear testing after humidity exposure, of at least 9.0 MPa when measured at 23 °C according to ASTM D3163.

When the PMH article is overmolded with a polyamide polymer onto surface layer A, in which surface layer A also comprises a polyamide polymer, the resulting overmolded PMH article exhibits a thermal stability, as determined by lap shear testing after 40 temperature cycles, of at least 11.5 MPa when measured at 23 °C according to ASTM D3163.

The novel PMH articles and overmolded PMH articles disclosed herein have very specific thermoplastic adhesive layer B compositions to achieve acceptable levels of adhesion between the layers within the A/B/C structure of the PMH article and wherein the adhesion between layers is maintained under various environmental conditions such as high humidity and thermal cycling.

The ability to achieve the desired combination of properties of overmolded PMH articles in which the PMH article has an A/B/C structure is quite unexpected. The use of typical acid or anhydride containing adhesives alone as thermoplastic adhesive layer B does not provide the desired combination of properties and acceptable levels of adhesion between layers A/B/C of the PMH articles and for overmolded PMH articles.

Another advantage of the PMH articles disclosed herein is they can be overmolded without the adhesive layer causing fouling of the mold during the overmolding process.

Specifically, the overmolded polymer-metal hybrid articles described herein comprise:
A) a surface layer comprising:
   A1) a polyamide;
B) a thermoplastic adhesive layer comprising:
   B1) from about 25 to 75 weight percent of at least one nonfunctionalized thermoplastic polyolefin having a melting point of from about 80 to 200 °C;
   B2) from about 75 to 25 weight percent of at least one functionalized thermoplastic polyolefin comprising from 0.02 to 10 weight percent of a carboxyl functional group;
   wherein the weight percent of (B1) and (B2) is based on the sum of the weight percent of (B1) and (B2) and thermoplastic adhesive layer B comprises a carboxyl functional group content of 0.02 to 1.5 weight percent based on the total weight percent of (B1) and (B2) in thermoplastic adhesive layer B when measured by ASTM E168;
C) a metal layer; and
D) a polyamide overmolded onto at least a part of surface layer A;
   wherein:
   layers A, B, and C are interlayered into an A/B/C structure;
   said overmolded polymer-metal hybrid article exhibits an initial adhesion of at least 11.5 MPa when measured at 23 °C, a high temperature adhesion of at least 5.5 MPa when measured at 85 °C, a lap shear after 1000 hrs humidity testing at 70 % relative humidity (RH) and 60 °C of at least 9.0 MPa when measured at 23 °C, and a lap shear of at least 11.5 MPa after 40 thermal cycles from minus 35 °C to plus 85 °C when measured at 23 °C, and
   wherein all lap shear values were determined according to ASTM D3163 using lap shear test B.

Also disclosed herein are overmolded polymer-metal hybrid articles comprising:
A) a surface layer comprising:
   A1) a polyamide;
B) a thermoplastic adhesive layer comprising:
   B1) from about 25 to 75 weight percent of at least one nonfunctionalized thermoplastic polyolefin having a melting point of from about 80 to 200 °C;
   B2) from about 75 to 25 weight percent of at least one functionalized thermoplastic polyolefin comprising from 0.02 to 10 weight percent of a carboxyl functional group;
   wherein the weight percent of (B1) and (B2) is based on the sum of the weight percent of (B1) and (B2) and thermoplastic adhesive layer B comprises a carboxyl functional group content of 0.02 to 1.5 weight percent based on the total weight percent of (B1) and (B2) in thermoplastic adhesive layer B when measured by ASTM E168;
C) a metal layer; and
D) a polyamide overmolded onto at least a part of surface layer A;
   wherein:
   layers A, B, and C are interlayered into an A/B/C structure; and
   said overmolded polymer-metal hybrid article exhibits a high temperature adhesion of at least 5.5 MPa when measured at 85 °C according to ASTM D3163 using lap shear test B.

Further disclosed herein are overmolded polymer-metal hybrid articles comprising:
A) a surface layer comprising:
   A1) a polyamide;
B) a thermoplastic adhesive layer comprising:
   B1) from about 25 to 75 weight percent of at least one nonfunctionalized thermoplastic polyolefin having a melting point of from about 80 to 200 °C;
   B2) from about 75 to 25 weight percent of at least one functionalized thermoplastic polyolefin comprising from 0.02 to 10 weight percent of a carboxyl functional group;
   wherein the weight percent of (B1) and (B2) is based on the sum of the weight percent of (B1) and (B2) and thermoplastic adhesive layer B comprises a carboxyl functional group content of 0.02 to 1.5 weight percent based on the total weight percent of (B1) and (B2) in thermoplastic adhesive layer B when measured by ASTM E168;
C) a metal layer; and
D) a polyamide overmolded onto at least a part of surface layer A;
   wherein:
   layers A, B, and C are interlayered into an A/B/C structure; and
   said overmolded polymer-metal hybrid article exhibits a lap shear after 1000 hrs humidity testing at 70 % relative humidity and 60 °C of at least 9.0 MPa when measured at 23 °C according to ASTM D3163 using lap shear test B.

Additionally disclosed herein are overmolded polymer-metal hybrid articles comprising:
A) a surface layer comprising:
   A1) a polyamide;
B) a thermoplastic adhesive layer comprising:
   B1) from about 25 to 75 weight percent of at least one nonfunctionalized thermoplastic polyolefin having a melting point of from about 80 to 200 °C;
   B2) from about 75 to 25 weight percent of at least one functionalized thermoplastic polyolefin comprising from 0.02 to 10 weight percent of a carboxyl functional group;
   wherein the weight percent of (B1) and (B2) is based on the sum of the weight percent of (B1) and (B2) and thermoplastic adhesive layer B comprises a carboxyl functional group content of 0.02 to 1.5 weight percent based on the total weight percent of (B1) and (B2) in thermoplastic adhesive layer B when measured by ASTM E168;
C) a metal layer; and
D) a polyamide overmolded onto at least a part of surface layer A;
   wherein:
   layers A, B, and C are interlayered into an A/B/C structure; and
   said overmolded polymer-metal hybrid article exhibits a lap shear of at least 11.5 MPa after 40 thermal cycles from minus 35 °C to plus 85 °C when measured at 23 °C according to ASTM D3163 using lap shear test B.

Additionally, disclosed herein are polymer-metal hybrid articles comprising:
a surface layer A comprising:
   A1. a polyamide or polypropylene;
a thermoplastic adhesive layer B comprising:
   B1. at least 50 wt. percent of a nonfunctionalized thermoplastic polyolefin having a melting point of from about 80 to 200 °C;
   B2. less than 50 wt. percent of a functionalized thermoplastic polyolefin
   comprising from 0.02 to 10 weight percent of a carboxyl functional group;
wherein the weight percent of (B1) and (B2) is based on the sum of the weight percent of (B1) and (B2) and thermoplastic adhesive layer B comprises a carboxyl functional group content of 0.02 to 1.5 wt. percent based on the total weight percent of (B1) and (B2) in thermoplastic adhesive layer B when measured by ASTM E168; and
a metal layer C;
wherein:
   layers A, B, and C are interlayered into an A/B/C structure; and
   said thermoplastic adhesive layer B exhibits a lap shear of at least 4 MPa, preferably 7 MPa, to aluminum when measured at 23 °C according to ASTM D3163 using an Aluminum/B/Aluminum test sample.

Also described herein are processes for preparing polymer-metal hybrid articles and overmolded polymer-metal hybrid articles.

A process for preparing overmolded polymer-metal hybrid articles comprises the steps of:
a) placing a polymer-metal hybrid article having layers in an A/B/C structure into a heated mold on a molding machine with surface layer A facing outward;
b) closing the heated mold and further heating the polymer-metal hybrid article to at least the T_{g} of surface layer A;
c) injecting into the heated mold an overmolding polymer onto surface layer A of the polymer-metal hybrid article to provide an overmolded polymer-metal hybrid article in which 90 percent or less of layer A is overmolded;
d) allowing the overmolded polymer-metal hybrid article to cool and solidify;
e) opening the mold and removing the overmolded polymer-metal hybrid article;
wherein after 50 repetitions of steps (a) to (e), total mold deposits are 50 percent less than the total mold deposits of an identical process using a polymer-metal hybrid article lacking layer A.

### Surface Layer A

Thermoplastic polymers or polymers useful in the preparation of surface layer A disclosed herein include without limitation, polypropylene or polyamides. The thermoplastic polymers can be amorphous or semi-crystalline. Polyamides used as the thermoplastic polymer include aliphatic polyamides, semiaromatic polyamides, and copolyamides. Blends of polyamides with other polyamides or with different polymers may also be used.

Fully aliphatic polyamides may be formed from aliphatic and alicyclic monomers such as diamines, dicarboxylic acids, lactams, aminocarboxylic acids, and their reactive equivalents. A suitable aminocarboxylic acid includes 11-amino-dodecanedioic acid. As disclosed herein, the term "fully aliphatic polyamide polymer" refers to copolymers derived from two or more such monomers and blends of two or more fully aliphatic polyamide polymers. Linear, branched, and cyclic monomers may be used. Star polymers may also be used. Carboxylic acid monomers useful in the preparation of fully aliphatic polyamides include, but are not limited to, aliphatic carboxylic acids, such as for example adipic acid (C6), pimelic acid (C7), suberic acid (C8), azelaic acid (C9), sebacic acid (C10), dodecanedioic acid (C12) and tetradecanedioic acid (C14). Useful diamines include those having four or more carbon atoms, including, but not limited to tetramethylene diamine, pentamethylene diamine, hexamethylene diamine, octamethylene diamine, decamethylene diamine, dodecamethylene diamine, 2-methylpentamethylene diamine, 2-ethyltetramethylene diamine, 2-methyloctamethylene diamine; trimethylhexamethylene diamine and/or mixtures thereof. Suitable examples of fully aliphatic polyamide polymers include PA6; PA66, PA46, PA610, PA510, PA512, PA56, PA612, PA614, PA613, PA 615, PA616, PA618, PA11, PA12, PA10, PA 912, PA913, PA914, PA915, PA936, PA1010, PA1012, PA1013, PA1014, PA1016, PA1018, PA1210, PA1212, PA1213, PA1214, PA1216, PA1218, and copolymers and blends of the same.

Preferred aliphatic polyamides include poly(hexamethylene adipamide) (PA66), polycaprolactone (PA6), and poly(tetramethylene hexanediamide) (PA46), PA610, PA510, PA512, PA612, PA614, PA616, PA618, PA1010, PA1012, PA1013, PA1014, PA1016, PA1018, PA1210, PA1212, PA1213, PA1214, PA1216, PA1218, and PA6/66. Blends of any of the foregoing aliphatic polyamides are also suitable, especially blends of PA66 and PA6.

Preferred semiaromatic polyamides include poly (hexamethylene decanediamide /hexamethylene terephthalamide) (PA610/6T), poly(hexamethylene dodecanediamide /hexamethylene terephthalamide) (PA612/6T), poly(pentamethylene decanediamide/ pentamethylene terephthalamide) (PA510/5T), poly(pentamethylene dodecanediamide /pentamethylene terephthalamide) (PA512/5T), poly(hexamethylene terephthalamide/2-methylpentamethylene terephthalamide) (PA6T/DT); poly(decamethylene terephthalamide) (PA10T), poly(nonamethylene terephthalamide) (PA9T), hexamethylene adipamide/hexamethylene terephthalamide/hexamethylene isophthalamide copolyamide (PA66/6T/6I); poly(caprolactam-hexamethylene terephthalamide) (PA6/6T); and poly(hexamethylene terephthalamide/hexamethylene isophthalamide) (PA6T/6I) copolymer. Blends of aliphatic polyamides, semiaromatic polyamides, and less than about 20 wt. % other thermoplastic polymers and polymers, and combinations of these may also be used.

Polyamides used for surface layer A should have a melting point ranging from about 140 to 280 °C, preferably from about 160 to 250 °C, and most preferably from about 170 to 250 °C. When the thermoplastic polymer useful in the preparation of surface layer A is polypropylene, the polypropylene may be a homopolymer or a copolymer. When a copolypropylene, the comonomer to be used with propylene may be any C2 to C8 α-olefin such as ethylene, butane, and octene.

Rheology modifiers, heat stabilizers, colorants, antioxidants, lubricants, and other additives may be added as adjuncts to the thermoplastic polymers used to prepare surface layer A.

The thermoplastic polymer may further comprise a toughener for increasing ductility of the thermoplastic polymer. Nonlimiting examples of tougheners which may be used in the thermoplastic polymers described herein include maleic anhydride grafted ethylene/propylene/hexadiene copolymers, ethylene/glycidyl (meth)acrylate copolymers, ethylene/glycidyl (meth)acrylate/(meth)acrylate esters copolymers, ethylene/α-olefin or ethylene/α-olefin/diene (EPDM) copolymers grafted with an unsaturated carboxylic anhydride, ethylene/2-isocyanatoethyl (meth)acrylate copolymers, ethylene/2-isocyanatoethyl (meth)acrylate copolymers/(meth)acrylate esters copolymers, and ethylene/acrylic acid ionomers.

Specific examples of ethylene/α-olefin/diene (EPDM) copolymers grafted with an unsaturated carboxylic anhydride include those grafted with from about 0.1 wt. % to 5 wt.% maleic anhydride, preferably from about 0.5wt. % to 4 wt. %, and more preferably from about 1 wt.% to 3 wt. %. Propylene is a preferred α-olefin. Specific examples of ethylene/α-olefin copolymers are those comprising from about 95-50 wt % ethylene and from about 5 to 50 wt% of at least one α-olefin with propylene, hexene, and octene being preferred α-olefins.

The thickness of surface layer A depends on the end use of the polymer-metal hybrid articles which comprises surface layer A. For example, if a polymer-metal hybrid article having an A/B/C structure is used as prepared, it may be beneficial to have a relatively thick surface layer A. In such an application, the thickness of surface layer A may range from about 0.0005 inch (0.0127 mm) to 1.00 inch (25.4 mm), preferably from about 0.001 inch (0.0254 mm) to 0.250 inch (6.35 mm).

If polymer-metal hybrid articles are to be overmolded, surface layer A need only be thick enough to protect the adhesive layer and to accept the interfacial bond with the over-molded polymer. In such applications, the thickness of surface layer A may range from about 0.0005 inch to 0.100 inch (2.54 mm), preferably from about 0.001 inch to 0.010 inch (0.254 mm).

### Thermoplastic Adhesive Layer B

Thermoplastic adhesive layer B may be prepared from a mixture of at least one nonfunctionalized thermoplastic polyolefin and at least one functionalized thermoplastic polyolefin.

The at least one nonfunctionalized thermoplastic polyolefin B1 for use in thermoplastic adhesive layer B described herein is an unfunctionalized polyolefin. In other words, the nonfunctionalized thermoplastic polyolefin does not comprise carboxyl functional groups (acid or anhydride groups) either in the backbone or grafted onto the backbone. The one or more nonfunctionalized thermoplastic polyolefins are used in combination with the one or more functionalized thermoplastic polyolefins. Preferably, the one or more nonfunctionalized thermoplastic polyolefins are selected from polyethylenes, polypropylenes, ethylene alpha-olefin copolymers, ethylene propylene diene rubbers (EPDM), polystyrene, and mixtures thereof. The one or more nonfunctionalized thermoplastic polyolefins preferably have a melting point ranging from about 80 to 200 °C.

Depending on the end use and physical properties desired, the one or more nonfunctionalized thermoplastic polyolefins may be present in thermoplastic adhesive layer B in an amount from at or about 25 to at or about 75 weight percent and more preferably from at or about 30 to at or about 70 weight percent, the weight percentages being based on the total weight of the nonfunctionalized thermoplastic polyolefins and functionalized thermoplastic polyolefins comprising thermoplastic adhesive layer B.

If a polypropylene homopolymer is used as a nonfunctionalized thermoplastic polyolefin, it cannot be the only nonfunctionalized thermoplastic polyolefin present in adhesive layer B. When adhesive layer B comprises a polypropylene homopolymer as a nonfunctionalized thermoplastic polyolefin, adhesive layer B should also comprise at least 20 weight percent, based on the total weight of nonfunctionalized thermoplastic polyolefin, of an ethylene and/or propylene copolymer or EPDM polymers as an additional nonfunctionalized thermoplastic polyolefin. For example, a nonfunctionalized thermoplastic polyolefin as used herein may comprise 80 weight percent polypropylene homopolymer and 20 weight percent of an ethylene and/or propylene copolymer. Examples of ethylene and/or propylene copolymers include ethylene alpha-olefin copolymers, polystyrene, and mixtures thereof. Examples of ethylene alpha-olefin copolymers include ethylene-butene, ethylene-propylene, ethylene-octene copolymers. EPDM polymers may also be used in combination with polypropylene homopolymers.

The at least one functionalized thermoplastic polyolefins B2 used in thermoplastic adhesive layer B may be any polymer which comprises a carboxyl functional group. Preferably, the one or more functionalized thermoplastic polyolefins are one or more polyolefins which have been grafted with a carboxyl functional group. The grafting agents, i.e. the at least one monomer having at least one carboxyl functional group, is preferably present in the one or more functionalized thermoplastic polyolefins in an amount from at or about 0.05 to at or about 6 weight percent, preferably from at or about 0.1 to at or about 2.0 weight percent, the weight percentages being based of the total weight of all monomers used to prepare the functionalized thermoplastic polyolefin.

Preferably, the at least one functionalized thermoplastic polyolefin comprises acid groups, anhydride groups, or a combination of acid and anhydride groups. Preferred examples of monomers which may be used to prepare said functionalized polyolefins includes ethylene, propylene, butene, octene, maleic anhydride, maleic acid, isopropylene, styrene, acrylates, methacrylates, alkylacrylates, and combinations of these.

Functionalized thermoplastic polyolefins are preferably derived by grafting at least one monomer having at least one carboxyl functional group to a polyolefin including ethylene alpha-olefins or copolymers derived from at least one alpha-olefin and a diene. Preferably, the thermoplastic adhesive layer B described herein comprises functionalized thermoplastic polyolefins selected from grafted polyethylenes, grafted polypropylenes, grafted ethylene alpha-olefin copolymers, grafted copolymers derived from at least one alpha-olefin and a diene and mixtures thereof. More preferably, the thermoplastic adhesive layer B described herein comprises maleic anhydride grafted polyolefins selected from maleic anhydride grafted polyethylenes, maleic anhydride grafted polypropylenes, maleic anhydride grafted ethylene alpha-olefin copolymers, maleic anhydride grafted copolymers derived from at least one alpha-olefin and a diene and mixtures thereof.

Polyethylenes used for preparing maleic anhydride grafted polyethylene (MAH-g-PE) are commonly available polyethylene polymers selected from HDPE (density higher than 0.94 g/cm³), LLDPE (density of 0.915 - 0.925 g/cm³) or LDPE (density of 0.91 - 0.94 g/cm³). However, for applications where the PMH articles are used in high temperature applications where temperatures can reach up to 85 °C, it is preferred that high density polyethylene homopolymers are not used to prepare the functionalized thermoplastic polyolefin. Polypropylenes used for preparing maleic anhydride grafted polypropylene (MAH-g-PP) are commonly available copolymer or homopolymer polypropylene polymers.

Ethylene alpha-olefins copolymers comprise ethylene and one or more alpha-olefins, preferably the one or more alpha-olefins have 3-12 carbon atoms. Examples of alpha-olefins include but are not limited to propylene, 1-butene, 1-pentene, 1-hexene-1, 4-methyl 1-pentene, 1-heptene, 1-octene, 1-nonene, 1-decene, 1-undecene and 1-dodecene. Preferably the ethylene alpha-olefin copolymer comprises from at or about 20 to at or about 96 weight percent of ethylene and more preferably from at or about 25 to at or about 85 weight percent; and from at or about 4 to at or about 80 weight percent of the one or more alpha-olefins and more preferably from at or about 15 to at or about 75 weight percent, the weight percentages being based on the total weight of the ethylene alpha-olefins copolymers. Preferred ethylene alpha-olefins copolymers are ethylene-propylene copolymers, ethylene-butene copolymers, and ethylene-octene copolymers.

Copolymers derived from at least one alpha-olefin and a diene are preferably derived from alpha-olefins having preferably 3-8 carbon atoms. Preferred copolymers derived from at least one alpha-olefin and a diene are ethylene propylene diene elastomers. The term "ethylene propylene diene elastomers (EPDM)" refers to any elastomer that is a terpolymer of ethylene, at least one alpha-olefin, and a copolymerizable non-conjugated diene such as norbornadiene, 5-ethylidene-2-norbornene, dicyclopentadiene, 1,4-hexadiene and the like. When a functionalized ethylene propylene diene elastomer is used in the thermoplastic adhesive layer B described herein, the ethylene propylene diene polymer preferably comprise from at or about 50 to at or about 80 weight percent of ethylene, from at or about 10 to at or about 50 weight percent of propylene and from at or about 0.5 to at or about 10 weight percent of at least one diene, the weight percentages being based on the total weight of the ethylene propylene diene elastomer.

The one or more functionalized thermoplastic polyolefins may be present in thermoplastic adhesive layer B in an amount from at or about 25 to at or 75 weight percent and more preferably from at or about 30 to at or about 75 weight percent, the weight percentages being based on the total weight of the nonfunctionalized thermoplastic polyolefins and functionalized thermoplastic polyolefins used to prepare thermoplastic adhesive layer B.

The amount of the at least one monomer having at least one carboxyl functional group used in the manufacture of the functionalized polyolefins, in combination with the concentration of the functionalized polyolefin(s) in thermoplastic adhesive layer B, determines the total carboxyl functional groups present in thermoplastic adhesive layer B. It is desirable that the total carboxyl functional groups present in thermoplastic adhesive layer B ranges from about 0.02 to 1.5 weight percent, preferably from 0.02 to 1 weight percent, still preferably from 0.05 to 1.0 weight percent, and more preferably from 0.05 to 0.75 weight percent, even more preferably from 0.05 to 0.55 weight percent, still more preferably from 0.02 to 0.5 weight percent, and most preferably from 0.05 to 0.20 weight percent based on the total weight of (B1) and (B2) in thermoplastic adhesive layer B.

The melting points of nonfunctionalized thermoplastic polyolefins and functionalized thermoplastic polyolefins that comprise thermoplastic adhesive layer B should be less than the melting point of surface layer A. Preferably, the melting point of thermoplastic adhesive layer B should be at least 10 °C, preferably at least 20 °C, and more preferably at least 25 °C below the melting point of surface layer A. It is understood that the melting point of thermoplastic adhesive layer B refers to the highest melting point polymer that comprises thermoplastic adhesive layer B.

Thermoplastic adhesive layer B may also comprise rheology modifiers, heat stabilizers, colorants, antioxidants, lubricants, and other additives as adjuncts so long as the additives do not adversely affect the properties of the overmolding polymer or the resulting overmolded polymer metal hybrid articles. It is preferred that the concentration these additives not exceed 3 wt percent, more preferably 1 wt percent of the total weight of all ingredients in thermoplastic adhesive layer B.

The thickness of thermoplastic adhesive layer B may range from about 1 mil (0.0254 mm) to about 10 mil (0.254 mm), preferably from about 1 mil to 5 mil (0.127 mm). Thicknesses below about 1 mil may result in lower bond strengths of the A/B/C structure and at thicknesses greater than 5 mils there is limited benefit to improvement in bond strength.

### Metal Layer C

Metal layer C can be any metal which has sufficient adhesion to thermoplastic adhesive layer B such that the resulting overmolded polymer-metal hybrid article exhibits the desired combination of properties. Preferably the metal is selected from aluminum, carbon steel, stainless steel, brass, copper, magnesium, and metal alloys. More preferably, the metal is aluminum or stainless steel.

The metal used for metal layer C may be used as received from the supplier or the metal may be cleaned to remove contaminants and oil residue from the metal surface. Examples of methods to clean the metal surface include washing the surface of the metal with water/surfactant and rinsing the metal to remove residual surfactant, or cleaning the metal with acetone and drying the metal surface. The metal surface may also be treated with plasma to remove contaminants and residual oils.

The thickness of metal layer C is limited only by the ability to stamp press a part from the polymer metal hybrid article. Preferably, the thickness of metal layer C that could be used ranges from about 0.254mm to about 6.35mm. Metal layer C thicknesses above 6.35 mm may be used, but the weight advantage of using polymer-metal hybrid articles is diminished as the thickness of the metal increases.

### Polymer-Metal Hybrid Articles

Polymer-metal hybrid articles having an A/B/C structure may be prepared from surface layer A, thermoplastic adhesive layer B, and metal layer C by laminating or bonding the three layers together. These polymer-metal hybrid articles may be used as prepared, but are preferably overmolded to provide overmolded polymer-metal hybrid articles.

The thickness of polymer-metal hybrid articles disclosed herein may range from about 0.30 mm to 7 mm, preferably from 0.30 to 5 mm.

### Process for Making Polymer-Hybrid Articles

Processes for preparing polymer-hybrid articles described herein may be accomplished by a variety of methods. First, the compositions used to prepare thermoplastic adhesive layer B or surface layer A may be formed into a film layer by, for example, casting processes or blown into a film layer. Surface layer A and thermoplastic adhesive layer B may be prepared as separate layers or the compositions used to prepare surface layer A and thermoplastic adhesive layer B may be cast or blown into a bilayer film comprising surface layer A and thermoplastic adhesive layer B in an A/B structure. Essentially any process may be used to form layers A and B disclosed herein and are easily within the skill of one in the art.

Metal layer C may be purchased as a sheet of metal having a thickness ranging from about 0.002 to 0.250 inches (0.05 mm to 6.35 mm). The metal may be used as purchased but it is preferable that the surface of the metal be washed with a solvent such as acetone or xylene and wiped dry to remove residual wax and other contaminants from the surface of the metal. Plasma treatment of the metal surface may also be used to clean the surface of the metal from contamination and oil residue.

Surface layer A, thermoplastic adhesive layer B, and metal layer C may be fed separately into lamination equipment or a bilayer comprising surface layer A and thermoplastic adhesive layer B having an A/B structure may be fed into lamination equipment along with metal layer C to form polymer-metal hybrid articles having an A/B/C structure. During lamination, the layers are heated and pressed together using rollers, platens or other means to apply pressure to the various layers to form polymer-metal hybrid articles.

Polymer-metal hybrid articles in the form of a laminated A/B/C structure as disclosed herein may be stamped into the desired shape depending on the end use application or can be used without being stamped. Examples of stamped articles include automotive components such as front end modules, lift-gates, and cross car beams. A process to prepare polymer-metal hybrid articles described herein comprises the step of:
a) laminating thermoplastic adhesive layer B and surface layer A onto a metal layer C using sufficient temperature and pressure to form a polymer-metal hybrid article having an A/B/C structure.

Polymer-metal hybrid articles may be used as laminated or the articles may be stamped using a metal stamping machine into the desired shape depending on the end use of the article.

It is important when polymer-metal hybrid articles disclosed herein are stamped into various shapes that thermoplastic adhesive layer B is not displaced, shifted, or torn during the stamping process due to the shear forces that the stamping process places on the layers. One advantage surface layer A provides during stamping is the lubricating effect during the stamping process, thus making the stamping process easier. Surface layer A also protects thermoplastic adhesive layer B from the high temperatures of the over-molding process where a low melt point adhesive could be displaced. Surface layer A also prevents mold deposits from forming on a mold during overmolding of polymer-metal hybrid articles. If surface layer A was not present, thermoplastic adhesive layer B would come into contact with the mold surface resulting in undesirable mold buildup.

### Overmolding Polymer

The overmolding polymer which is overmolded onto polymer-metal hybrid articles described herein to provide an overmolded polymer-metal hybrid article is selected from polyamides or polypropylenes depending on the polymers in surface layer A. If surface layer A comprises at least one polyamide, then the overmolding polymer preferably comprises at least one polyamide. If the surface layer A comprises at least one polypropylene based polymer, then the overmolding polymer preferably comprises at least one polypropylene based polymer.

It is preferred, though not required, that the same species of polymer is used for both surface layer A and the overmolding polymer. In other words, if a polyamide is used in surface layer A, then the overmolding polymer preferably comprises a polyamide. It is also desirable that surface layer A have a lower melting point and lower hear of fusion than the overmolding polymer.

The overmolding polymer may also comprise functionalized materials such as those used in thermoplastic adhesive layer B but is not preferred.

The overmolding polymer may comprise reinforcing agents for improving mechanical strength and other properties, which may be a fibrous, tabular, powdery or granular material and may include glass fibers, carbon fibers including PAN-derived or pitch-derived carbon fibers, gypsum fibers, ceramic fibers, asbestos fibers, zirconia fibers, alumina fibers, silica fibers, titanium oxide fibers, silicon carbide fibers, rock wool, powdery, granular or tabular reinforcing agents such as mica, talc, kaolin, silica, calcium carbonate, glass beads, glass flakes, glass microballoons, clay, wollastonite, montmorillonite, titanium oxide, zinc oxide, and graphite. Two or more reinforcing agents may be combined in these compositions; and although not expressly stated herein, these compositions may include every combination of reinforcing agents described herein.

Glass fibers, carbon fibers, glass flakes, glass beads, mica, and combinations of these are preferred. Suitable glass fibers may be chopped strands of long or short glass fibers, and milled fibers of these.

The reinforcing agent may be sized or unsized. The reinforcing agent may be processed on its surface with any known coupling agent (e.g., silane coupling agent, titanate coupling agent) or with any other surface-treating agent. The reinforcing agent for use herein may be coated.

If fibers are used as the reinforcing agent, the fibers may have a circular or non-circular cross section. A fiber having a non-circular cross section refers to a fiber having a major axis lying perpendicular to a longitudinal direction of the fiber and corresponding to the longest linear distance in the cross section. The non-circular cross section has a minor axis corresponding to the longest linear distance in the cross section in a direction perpendicular to the major axis. The non-circular cross section of the fiber may have a variety of shapes including a cocoon-type (figure- eight) shape; a rectangular shape; an elliptical shape; a semielliptical shape; a roughly triangular shape; a polygonal shape; and an oblong shape. As will be understood by those skilled in the art, the cross section may have other shapes. The ratio of the length of the major axis to that of the minor access is preferably between about 1.5:1 and about 6:1. The ratio is more preferably between about 2:1 and 5:1 and yet more preferably between about 3:1 to about 4:1. The fiber may be long fibers, chopped strands, milled short fibers, or other suitable forms known to those skilled in the art.

If used, the reinforcing agent ranges from about 10 to about 70 weight percent, preferably about 15 to about 60 weight percent, and more preferably about 15 to about 55 weight percent of the total weight of the overmolding polymer(s) described herein. Even though not expressly stated herein, all possible ranges between 10 and 70 percent reinforcing agent of the total weight of the overmolding polymer are contemplated in these compositions.

The overmolding polymer may also comprise rheology modifiers, heat stabilizers, colorants, antioxidants, lubricants, and other additives as adjuncts so long as the additives do not adversely affect the properties of the overmolding polymer or the resulting overmolded polymer metal hybrid articles. It is preferred that the concentration these additives not exceed 5 wt percent of the total weight of the overmolding polymer.

### Process for Making Overmolded Polymer-Hybrid Articles

Stamped polymer-metal hybrid articles may be overmolded with thermoplastic polymers, including polyamides and polypropylenes, to provide overmolded polymer-metal hybrid articles. A process to prepare overmolded polymer-metal hybrid articles described herein comprises the steps of:
a) placing a polymer-metal hybrid article having layers in an A/B/C structure into a heated mold on a molding machine with surface layer A facing outward;
b) closing the heated mold and further heating the polymer-metal hybrid article to at least the T_{g} of surface layer A;
c) injecting into the heated mold an overmolding polymer onto surface layer A of the polymer-metal hybrid article to provide an overmolded polymer-metal hybrid article in which 90 percent or less of layer A is overmolded;
d) allowing the overmolded polymer-metal hybrid article to cool and solidify;
e) opening the mold and removing the overmolded polymer-metal hybrid article.

An advantage of the polymer-metal hybrid articles disclosed herein is that during manufacture of the overmolded polymer-metal hybrid article, at least 50 overmolded polymer-metal hybrid articles can be consecutively produced on the same molding machine without the surface of the mold cavity which comes into contact with surface layer A of the polymer-metal hybrid article during overmolding becoming contaminated with measurable amounts of contaminants from the polymer-metal hybrid article. Specifically, after 50 repetitions of steps (a) to (e) the total mold deposits are 0.25 grams or less per square inch of mold surface which is in contact with surface layer A when the mold is closed. An alternative way of describing this advantage of the polymer-metal hybrid articles disclosed herein is that after 50 repetitions of steps (a) to (e), total mold deposits are 50 percent less, preferably 90 percent less, than the total mold deposits of an identical process using a polymer-metal hybrid article lacking surface layer A.

Examples of stamped articles include automotive components such as front end modules, lift-gates, and cross car beams.

### Overmolded Polymer-Hybrid Articles

Overmolded polymer-hybrid articles disclosed herein have improved retention of physical properties such as flexural modulus and lap shear after exposure to various environmental conditions compared to identical overmolded polymer-hybrid articles but which do not comprise surface layer A. An advantage of overmolding polymer-metal hybrid articles is that the overmolding process may allow the introduction of ribs, cross-supports, or other structural elements to the polymer-metal hybrid articles. However, if thermoplastic layer B has insufficient adhesion properties to either surface layer A or metal layer C, then the resulting overmolded polymer-metal hybrid article may exhibit undesirable or inferior properties such as flexural modulus or lap shear both initially and after environmental exposure.

Overmolded polymer-hybrid articles disclosed herein, in which the overmolding polymer is a polyamide, exhibit an initial lap shear which is at least 10 percent, preferably at least 20, more preferably at least 25, and most preferably at least 50 percent greater than an identical overmolded polymer-metal hybrid article, tested under identical conditions, but which does not comprise surface layer A when measured according to ASTM D3163.

Additionally, overmolded polymer-metal hybrid articles disclosed herein also exhibit an initial flexural modulus which is at least 10 percent greater than an identical overmolded polymer-metal hybrid article, tested under identical conditions, but which does not comprise surface layer A and thermoplastic adhesive layer B when measured according to ISO 178 when mechanically interlocked test samples are used.

The overmolded polymer-metal hybrid articles disclosed herein, when heat cycled from minus 35 to 85 °C for 40 cycles, exhibit an improvement in lap shear of at least 10 percent compared to an identical overmolded polymer-metal hybrid article, tested under identical conditions, but which does not comprise surface layer A when measured according to ASTM D3163.

The overmolded polymer-metal hybrid articles disclosed herein, when exposed to 70 % relative humidity and 60 °C for 1000 hours, exhibits an improvement in lap shear of at least 10 percent compared to an identical overmolded polymer-metal hybrid article, tested under identical conditions, but which does not comprise surface layer A when measured according to ASTM D3163.

Overmolded polymer-hybrid articles disclosed herein unexpectedly exhibit a combination of initial adhesion, high temperature adhesion, moisture resistance, and thermal stability properties which are not obtainable with typical adhesive systems used to bond metals to overmolded polymer compositions. Overmolded polymer-hybrid articles disclosed herein exhibit an initial adhesion or initial lap shear of at least 11.5 MPa when measured at 23 °C, a high temperature adhesion or high temperature lap shear of at least 5.5 MPa when measured at 85 °C, a moisture resistance as measured by a lap shear after 1000 hrs humidity testing at 70 % relative humidity (RH) and 60 °C of at least 9.0 MPa when measured at 23 °C, and a thermal stability as measured by a lap shear of at least 11.5 MPa after 40 thermal cycles from minus 35 °C to plus 85 °C when measured at 23 °C, and wherein all lap shear values were determined according to ASTM D3163 using lap shear test B.

Unexpectedly, when overmolded polymer-hybrid articles disclosed herein are exposed to elevated temperature testing or humidity testing as described herein, the exposed overmolded polymer-hybrid articles show an unexpected improvement in flexural modulus, bending stiffness, and lap shear of at least 10, preferably at least 20, more preferably at least 25, and most preferably at least 50 percent greater than overmolded polymer-hybrid articles which are identical in shape and composition and which have been exposed to identical heat cycling or humidity testing, but which do not comprise surface layer A.

### EXAMPLES

### Materials

PA1: poly(hexamethylene terephthalamide/hexamethylene decanediamide) (PA610/6T (80:20 molar ratio) having a melting point of 214 °C.
PA2: poly(hexamethylene adipamide) (PA66) having a melting point of 262 °C, a viscosity of 100 cm³/g (ISO 307). and comprising 50 wt. % glass fibers available from E.I. DuPont de Nemours and Company, Wilmington, DE as Zytel 70G50HSLA BK039B.
NFP-1: an ethylene/butene copolymer having a mp of 125°C, a melt index of 4.8 g/10 min @ 190 C/1 Kg, and a density of 0.925 g/cm³.
NFP-2: An ethylene/propylene/diene terpolymer (69/30.5/0.5 wt.%) having a Mooney Viscosity of 20 (ML 1+4,125°C).
NFP-3: a polystyrene homopolymer having a melt index of 3.7 g/lOmin (200°C/5kg)
NFP-4: an ethylene/propylene copolymer having a MI of 5.0 g/lOmin, a density of 0.90 g/cc, and a melting point of 134 °C.
NFP-5: a polypropylene homopolymer having a MI of 3.5 g/lOmin, a density of 0.900 g/cc, and a MP of 160 °C.
NFP-6: an ethylene/propylene/diene terpolymer (70/29.5/0.5 wt.%) having a Mooney Viscosity of 45 (ML 1+4,125 °C).
NFP-7: an ethylene/propylene co-polymer having a MI of 1.9 g/lOmin (230 °C/2.16kg).
NFP-8: an ethylene-butene copolymer having a MI of 5.2 g/lOmin (190 °C/2.16kg) a density of 0.899 g/cc, and a melting point of 119 °C.
NFP-9: an ethylene-butene copolymer having a density of 0.922 g/cc and a MI of 11.5 g/lOmin (190 C/2.16kg) available as Nova Sclair 31G from Nova Chemicals, Pittsburgh, PA, USA. NFP-10: a low density polyethylene having a density of 0.92 g/cc and a MI of 1.9 g/lOmin (190 C/2.16kg).
NFP-11: an ethylene-butene copolymer having a having a density of 0.962 g/cc and a MI of 13 g/10min (190 C/2.16kg) available as Nova Sclair 2909 from Nova Chemicals, Pittsburgh, PA, USA.
NFP-12: an ethylene-butene copolymer having a density of 0.905g/cc and a MI of 1.0 g/lOmin (190 C/2.16kg).
NFP-13: an ethylene-butene copolymer having a mp of 166 °C, a density of 0.90 g/cc and a MI of 0.45 g/lOmin (190 C/2.16kg) available from Lyondell Basell as Profax 7823.
NFP-14: a polypropylene homopolymer comprising 40 percent glass fibers and 60 percent polypropylene having a mp of 205 °C and a density of 1.33 g/cc, available from RTP Company, Winona, MN, USA as RTP 199 X 70836B.
FP-1: a homopolymer high density polyethylene having a density of 0.958 g/cm³, a melt index of 0.95 g/lOmin, and a maleic anhydride content of 1.2 wt %.
FP-2: a polypropylene homopolymer having a MI of 12.5 (160 °C/0.325kg) grafted with 1.1 wt % maleic anhydride.
FP-3: a polypropylene-ethylene copolymer having a MI of 0.65 g/lOmin (230 °C/2.16kg), a density of 0.88 g/cc and a mp of 163 °C and which has been grafted with 1.4 wt % maleic anhydride.
FP-4: a homopolymer high density polyethylene having a density of 0.96 g/cc and a MI of 4.9 g/lOmin (190 C/2.16kg) grafted with 1 wt % maleic anhydride.
FP-5: a polypropylene homopolymer having a MI of 3.5 g/lOmin, a density of 0.900 g/cc, and a MP of 160 °C and which has been grafted with 0.6 weight percent maleic anhydride.
AO-1: pentaerythritol Tetrakis(3-(3,5-di-tert-butyl-4-hydroxyphenyl)propionate) antioxidant.
SL1: a surface layer comprising a mixture of PA6 / PA66 / PA610 (40/36/24 wt.% blend ratio) with a melt point of 156°C, a specific gravity of 1.08 and a RV of 70-100 (ISO 307)
SL2: a surface layer comprising 100 weight percent PA1
SL3: a surface layer comprising 100 weight percent of PA6 having a mp of 220 °C, a density of 1.12 g/cc, and a relative viscosity of 3.89-4.17 (as per ISO 307)
SL4: a surface layer comprising 100 weight percent PA2
SL5: is NFP-13
SL6: is NFP-5

### Carboxyl Functional Groups

The weight percent of carboxyl functional groups or acid functional groups in the functionalized thermoplastic polyolefin used in thermoplastic adhesive layer B is determined according to ASTM E168 by infrared analysis using a Nicolet Avatar FTIR spectrometer at a resolution of 4 cm⁻¹, a scan range of 4000-400 cm⁻¹, with 32 scans per test sample. The absorbance wavelength peaks at approximately 1790 cm-¹ and 1860 cm⁻¹ are used to determine the content of acid functionality in the functionalized thermoplastic polyolefin. A sample of the same thermoplastic polyolefin without acid functionality is used as a baseline.

### Lap Shear

All lap shear measurements were made according to ASTM D3163-01 (2014), subsequently identified as ASTM D3163. All lap shear values are MPa units. To determine the adhesive properties of overmolded polymer-metal hybrid articles, test samples were prepared according to lap shear test A or B as follows:

Test A: The ingredients used to prepare thermoplastic adhesive layer B are blended together using a 25mm W&P twin screw extruder to obtain a homogeneously mixed composition. The homogeneously mixed composition was extrusion cast into a film of thermoplastic adhesive layer B having a thickness of 3 mils. A 0.5 inch (12.7 mm) square piece of film was then sandwiched between two identical aluminum (Al) sheets having a thickness of 0.063 inches (1.6 mm), a width of 0.5 inches, and a length of 3 inches (76.2 mm). The Al/B/Al laminated test sample was pre-heated for 2 min at 230 °C then pressed for 30 seconds at 50 psi using a Carver press to obtain the test sample used for lap shear testing. The test samples were tested for lap shear using an Instron 4202 using a 2000 lb. load cell at 0.2"/min according to ASTM D3163.

Test B1: An aluminum coupon (5052-H32 available from Online Metals) having a thickness of 0.063 inches (1.6 mm) and 100 mm width and length, was thermally laminated to a 5 mil (0.005inch) thick bilayer film having an A/B structure in which surface layer A is 2 mils thick and thermoplastic adhesive layer B is 3 mils thick using a Glenro MPH laminator to provide a polymer metal hybrid test sample having an A/B/C structure. The polymer-metal hybrid test sample was then cut into 0.5" x 2" (W by L) (12.7 mm by 50.8 mm) plate using a band saw. These test plates were overmolded in a Nissie 180 Ton injection molding machine with PA2 into a 0.5 inch (12.7 mm) wide by 5 inch (127 mm) long by 0.25 inch (6.35 mm) thickness, bar. The resulting test samples have a 2 inch (50.8 mm) long metal overmolded test sample on one end with a 3 inch (76.2 mm) polymer tab on the opposite end. The polyamide layer on the metal overmolded area of the test sample was cut by hand (in a jig) to provide a 0.5 inch (12.7 mm) wide by 0.5 inch long lap test area near the middle of the sample. The cut tensile bar test sample was tested using an Instron 5966 and a 2000 lb. load cell at 0.05 inches/min (1.27 mm/min) according to ASTM D3163.

Test B2: An aluminum coupon (5052-H32 available from Online Metals) having a thickness of 0.063 inches (1.6 mm) and 100 mm width and length, was thermally laminated to a 5 mil (0.005inch) thick bilayer film having an A/B structure in which surface layer A is 2 mils thick and thermoplastic adhesive layer B is 3 mils thick using a Glenro MPH laminator to provide a polymer metal hybrid test sample having an A/B/C structure. The polymer-metal hybrid test sample was then cut into 4" x 2" (W by L) (101.6 mm by 50.8 mm) plate using a band saw. These test plates were overmolded in a Nissie 180 Ton injection molding machine with PA2 into a 4 inch (101.6 mm) wide by 5 inch (127 mm) long by 0.125 inch (3.175 mm) thickness plaque. Each plaque was then cut using a bandsaw into three test samples, each sample being 1 inch (25.4 mm) wide by 5 inches (127 mm) long and a 0.5 inch (12.7 mm) waste strip was discarded from the plaques outside edges. The resulting test samples have a 2 inch (50.8 mm) long metal overmolded test sample on one end with a 3 inch (76.2 mm) polymer tab on the opposite end. The polyamide layer on the metal overmolded area of the test sample was cut by hand (in a jig) to provide a 1 inch (25.4 mm) wide by 0.25 inch (6.35 mm) long lap test area near the middle of the sample. The cut tensile bar test sample was tested using an Instron 5966 and a 2000 lb. load cell at 0.05 inches/min (1.27 mm/min) according to ASTM D3163.

Test A and B1 provides an overlap area of 0.5 (12.7 mm) inch by 0.5 inch (12.7 mm) and the overlap test area for test B2 is 1 inch (25.4 mm) by 0.25 inches (6.35 mm).

Initial adhesion, high temperature adhesion, moisture resistance, and thermal stability were all measured by lap shear test B1 or B2. For high temperature adhesion, the test samples were measured at 85 °C.

Initial adhesion (initial lap shear) values and high temperature adhesion (initial lap shear at 85 °C) were obtained on overmolded polymer metal hybrid test samples after molding and before the test samples were exposed to any subsequent environmental testing such as humidity exposure or elevated temperature cycling.

Lap shear values could not be obtained on A/B/C structures before overmolding due to the tensile strength of surface layer A being less than the interfacial adhesion between surface layer A and thermoplastic adhesive layer B. In other words, surface layer A breaks before the interlayer adhesion between surface layer A and thermoplastic adhesive layer B is reached.

### Lap Shear after Thermal Cycling (Thermal Stability)

Test samples to be used for thermal stability testing after thermal cycling were thermally cycled according to the following procedure:
Test samples are initially heated from room temperature (about 23 °C) to 85 °C at 2 °C /minute and held at 85 °C for 200 minutes. The sample is then cooled from 85 °C to -35 °C over a period of 60 minutes (2 °C /minute) and held at -35 °C for 60 minutes. The sample is then heated from -35 °C to 23 °C at 2 °C /minute. This heating and cooling cycle is repeated for a total of 40 cycles to condition the test sample.

Lap shear of the thermally cycled test samples was determined according to ASTM D3163.

### Lap Shear after Humidity Testing (Humidity Resistance)

Test samples to be used for humidity resistance testing were exposed to 70 % relative humidity (RH) and 60 °C for 1000 hrs. in a ThermoForma environmental chamber. After RH exposure, the test samples were allowed to cool to room temperature (about 23 °C) and then tested for lap shear according to ASTM D3163.

### Flexural Modulus

Flexural modulus values for all samples were obtained using a 3-Point flexural test according to ISO 178 using an Instron 4469 with a support radius of 5 mm, a nose radius of 5 mm and a support span of 50.8 mm. All samples were tested with metal layer C facing upward. Test samples for flexural modulus testing, including humidity and thermal cycling tests, were prepared according to the procedures below.

Mechanically interlocked samples were prepared as follows:
An aluminum coupon (5052-H32 available from Online Metals) having a thickness of 1.6 mm and 150 mm width and length, was thermally laminated to a 5 mil (0.005 inch) thick bilayer film having an A/B structure in which surface layer A is 2 mils thick and thermoplastic adhesive layer B is 3 mils thick using a Glenro MPH laminator to provide a polymer metal hybrid test sample having an A/B/C structure. The polymer-metal hybrid test sample was then cut into 12.7 mm wide by 127 mm long test samples using a band saw. Four holes, each 4.76 mm in diameter, were drilled through along the centerline of the sample at equal intervals of 25.4 mm, on center. A 45 degree bevel was machined on the non-coated side, of the drilled holes to increase their diameter to 6.0 mm to form mechanical fastening points when over-molded with polymer.

Test samples which were not mechanically interlocked were prepared as follows:
An aluminum coupon (5052-H32 available from Online Metals) having a thickness of 1.6 mm and 150 mm width and length, was thermally laminated to a 5 mil (0.005 inch) thick bilayer film having an A/B structure in which surface layer A is 2 mils thick and thermoplastic adhesive layer B is 3 mils thick using a Glenro MPH laminator to provide a polymer metal hybrid test sample having an A/B/C structure. The polymer-metal hybrid test sample was then cut into 12.7 mm wide by 127 mm long test samples using a band saw.

Both mechanically interlocked samples and samples which were not mechanically interlocked, as prepared above, were overmolded according to the following procedure:
Test samples were overmolded in a Nissie 180 Ton injection molding machine with PA2 into 0.5 inch (12.7 mm) wide by 5 inch (127 mm) long by 0.25 inch (6.35 mm) thickness tensile bars with the overmolding polymer injected onto the side of the test sample comprising the polymeric layer(s) (if present).

### Initial Flexural Modulus

Initial flexural modulus of the test samples was determined before any thermal cycling (zero thermal cycles) or humidity exposure (0 hrs.) according to ISO 178.

### Spring Constant Bending Stiffness

Because the polymer-metal hybrid test samples are multi-material flexural bars, the stiffness may be characterized by the spring constant "K" (Force versus deflection) which can be calculated from test sample (test bar) and flexural modulus data generated by ISO 178:2010 test method using the three-point bending formula K = (48 x FM x I)/L³, where FM is the flexural modulus of the test sample, I is the second moment of inertia (which is derived from (1/12 x width x height³ of the test sample)). Testing was performed with the metal side facing upward.

### Process for Preparing Polymer Metal Hybrid Articles

Thermoplastic adhesive layer B compositions disclosed in Tables 1 and 2 were used to prepare polymer-metal hybrid articles as disclosed herein. Thermoplastic adhesive layer B was laminated to surface layer A and metal layer C to form polymer-metal hybrid articles having an A/B/C structure. The metal used for all examples was aluminum 5052-H32 from Onlinemetals.com.

Lap shear values in tables 1 and 2 are obtained according to ASTM D3163 on test samples having an Aluminum/B/Aluminum (Al/B/Al) structure in which the compositions of thermoplastic adhesive layers B as disclosed in tables 1 and 2 were tested for lap shear.

**Table 1**

| Ingredients | AL1 | AL2 | AL3 | AL4 | AL5 | AL6 | AL7 | AL8 |
|---|---|---|---|---|---|---|---|---|
| NFP-1 | 69.9 | | | | | | | |
| NFP-2 | 5 | | 5.02 | | 30 | 20 | | |
| NFP-3 | 12.5 | | | | | | | |
| NFP-4 | | | | 57.05 | | | | |
| NFP-5 | | 19.9 | 12.06 | 10 | | 60.5 | | |
| NFP-6 | | 6 | | 20 | | | | |
| NFP-7 | | 52 | 68.1 | | 29.9 | | | |
| NFP-8 | | 9.5 | 5.02 | | | | | |
| FP-1 | 12.5 | | | | | | | |
| FP-2 | | 10 | 9.7 | 12.5 | 40 | | | |
| FP-3 | | | | | | | | 100 |
| FP-5 | | | | | | 19.2 | 100 | |
| AO-1 | 0.1 | 0.1 | 0.1 | 0.45 | 0.1 | 0.3 | | |
| Tackifier | | 2.5 | | | | | | |

| Physical Properties | | | | | | | | |
|---|---|---|---|---|---|---|---|---|
| TOTAL NFP (wt.%) | 86.7 | 87.4 | 90.2 | 87.05 | 59.9 | 80.5 | 0 | 0 |
| wt. % grafting level | 0.13 | 0.11 | 0.11 | 0.15 | 0.44 | 0.1 | 0.52 | 1.3 |
| Lap Shear (Al/B/Al) | 10 | 5 | 9 | 11 | 9 | 4 | 3 | 6 |

**Table 2**

| Ingredients | AL9 | AL10 | AL11 | AL12 | AL13 |
|---|---|---|---|---|---|
| NFP-1 | | | | | |
| NFP-2 | 23 | | 12.5 | 10 | 10 |
| NFP-3 | | | 7.5 | 7.5 | 7.5 |
| NFP-5 | | | | | 57.4 |
| NFP-9 | 44.1 | | | | |
| NFP-10 | 7.8 | | | | |
| NFP-11 | | 49.55 | | | |
| NFP-12 | | 30 | | | |
| NFP-13 | | | 54.9 | 57.4 | |
| FP-4 | 25.0 | 20 | | | |
| FP-5 | | | 20 | 20 | 20 |
| AO-1 | 0.1 | 0.45 | 0.1 | 0.1 | 0.1 |
| Tackifier | | | 5 | 5 | 5 |
| TOTAL NFP (wt.%) | 74.9 | 79.55 | 74.9 | 74.9 | 74.9 |
| wt. % grafting level | 0.23 | 0.14 | 0.1 | 0.1 | 0.1 |
| Lap Shear (Al/B/Al) | 7 | 7 | | | |

The polymer-metal hybrid articles were overmolded with glass fiber reinforced polyamide 66 compositions (PA2) comprising 50 percent glass fibers and 50 percent polyamide 66 having a mp of 262 °C, a density of 1.57 g/cc, and a viscosity of 100 CM3/g (ISO 307) and tested to determine adhesion between the overmolded polyamide and the polymer-metal hybrid article. Tables 3 and 4 provide adhesion values when various thermoplastic adhesive layers B, as disclosed in tables 1 and 2, are used in the polymer-metal hybrid articles.

**Table 3**

| | C1 | C2 | E1 | C3 | C4 |
|---|---|---|---|---|---|
| AL | AL1 | AL1 | AL1 | AL1 | AL1 |
| SL | none | SL1 | SL2 | SL3 | SL4 |

| Physical Pro perties | | | | | |
|---|---|---|---|---|---|
| Initial Lap Shear¹ (23°C) | 8.2 | 8.5 | 9.3 | 8.3 | 8.2 |
| Initial Lap Shear² (23°C) | 7.5 | 9 | 10 | 10.7 | 10 |
| Initial Lap Shear¹ (85°C) | 2.9 | 3.1 | 3.8 | 3 | NM |
| Initial Lap Shear² (85°C) | 3.5 | 4.4 | 5.2 | 5.1 | 4.6 |
| Lap Shear² (1000 hrs) | 7.2 | 10.5 | 11.2 | 11.3 | 11.2 |
| | | | | | |
| Lap Shear² (thermally cycled) | 7.7 | 9.9 | 11.5 | 11.1 | 10.1 |
| ¹ Lap Shear Test B 1 | | | | | |
| ² Lap Shear test B2 | | | | | |
| NM - not measured | | | | | |

Adhesive layer AL1 used in table 3 is based on FP1 which is a polyethylene homopolymer based functionalized polymer. The results in Table 3 show that at low levels of acid functionally, such as 0.13 wt % in thermoplastic adhesive layer B, and at a specific ratio of nonfunctionalized thermoplastic polyolefin to functionalized thermoplastic polyolefin as recited herein, that simultaneously obtaining desired levels of initial adhesion, high temperature adhesion, moisture resistance, and thermal stability between the overmolded polymer and the polymer metal hybrid article may be difficult depending on surface layer A used. Example E1 shows that when PA610/6T is used in surface layer A, desirable values for initial adhesion, high temperature adhesion, moisture resistance, and thermal stability can be obtained.

**Table 4**

| Ingredients | C5 | C6 | E2 | E3 | E4 | E5 |
|---|---|---|---|---|---|---|
| AL | AL4 | AL4 | AL4 | AL4 | AL4 | AL6 |
| SL | none | SL1 | SL2 | SL3 | SL4 | SL3 |

| Physical Pro perties | | | | | | |
|---|---|---|---|---|---|---|
| Initial lap Shear¹ (23°C) | 7.2 | 9.1 | 11.4 | 10.3 | 9.7 | 15.5 |
| Initial lap Shear² (23°C) | 10.5 | 8.4 | 14.4 | 12.6 | 14.3 | 14.4 |
| Initial lap Shear¹ (85°C) | 3.4 | NM | 6.8 | NM | NM | NM |
| Initial lap Shear² (85°C) | 5.1 | 4.5 | 6.9 | 6.2 | 6.7 | 7.6 |
| Lap Shear² (1000 hrs) | 8.5 | 9.4 | 15.5 | 12.6 | 13.9 | NM |
| Lap Shear² (thermally cycled) | 7.4 | 6.8 | 15.8 | 12.6 | 14.3 | NM |
| ¹ Lap Shear Test B 1 | | | | | | |
| ² Lap Shear test B2 | | | | | | |
| NM - not measured | | | | | | |

The results in table 4 show that at functional group concentrations around 0.15 wt % down to about 0.11 mol %, adhesion improves between the overmolded polymer and the polymer metal hybrid article. Examples E2 to E5 all exhibit a combination of initial adhesion of at least 11.5 MPa, a high temperature adhesion of at least 5.5 MPa, a moisture resistance as measured after 1000 hrs humidity testing of at least 9.0 MPa, and a thermal stability of at least 11.5 MPa measured after 40 thermal cycles.

The results in table 4 show that polymer-metal hybrid articles disclosed herein exhibit an initial adhesion which is at least 10 percent greater than an identical overmolded polymer-metal hybrid article but which does not comprise surface layer A when measured according to ASTM D3163 at 23 °C. When tested at 85 °C, the high temperature adhesion is at least 20 percent greater than an identical overmolded polymer-metal hybrid article but which does not comprise surface layer A. Additionally, the results in table 4 show that polymer-metal hybrid articles disclosed herein exhibit a moisture resistance and thermal stability which are at least 30 percent greater than identical overmolded polymer-metal hybrid articles but which do not comprise surface layer A.

Table 4 also shows that when the functionalized thermoplastic polyolefin is prepared from a polyethylene homopolymer (SL1) the resulting physical properties of the polymer metal hybrid article (C6) are inferior to polymer metal hybrid articles which comprise functionalized thermoplastic polyolefins prepared from other polymer backbones.

**Table 5**

| Ingredients | E6 | E7 | E8 | E9 |
|---|---|---|---|---|
| AL | AL6 | AL13 | AL11 | AL12 |
| SL | SL2 | SL2 | SL2 | SL2 |

| Physical Pro perties | | | | |
|---|---|---|---|---|
| Initial lap Shear¹ (23°C) | 15.5 | 13.7 | 14.6 | 15 |
| Initial lap shear¹ (85°C) | 7.7 | 7.5 | 7.5 | 7.5 |
| ¹ Lap Shear Test B1 | | | | |

The results in table 5, using test A for lap shear, show that at even at functional group concentrations around 0.1 wt % in adhesive layer B at the recited ratio of B1 to B2, adhesion improves between the overmolded polymer and the polymer metal hybrid article compared to identical overmolded polymer-metal hybrid articles but which do not comprise surface layer A.

. Examples E6 to E9 exhibit a high temperature adhesion of at least 5.5 MPa and an initial adhesion of at least 11.5 MPa.

Various polymer-metal hybrid articles were overmolded with a glass fiber reinforced polypropylene composition comprising 40 percent chopped glass fibers and 60 percent polypropylene having a mp of 205 °C and a density of 1.33, and tested to determine the adhesion between the overmolded polypropylene composition and the polymer-metal hybrid article. Table 6 provides adhesion values when various thermoplastic adhesive layers B are used in the polymer-metal hybrid articles.

**Table 6**

| Ingredients | E10 | E11 | C7 | C7A | E12 | E13 |
|---|---|---|---|---|---|---|
| AL | AL1 | AL1 | AL4 | AL1 | AL4 | AL4 |
| SL | SL5 | SL6 | none | SL2 | SL5 | SL6 |

| Physical Pro perties | | | | | | |
|---|---|---|---|---|---|---|
| Initial lap shear¹ (23°C) | 6.6 | 5.4 | NM | 0.2 | 5.3 | 5.6 |
| Initial lap shear² (23°C) | NM | NM | 11.5 | NM | 11.5 | NM |
| Initial lap Shear² (85°C) | NM | NM | 6.7 | NM | 6.4 | NM |
| Lap Shear² (1000 hrs) | NM | NM | 12.6 | NM | 12 | NM |
| Lap Shear² (thermally cycled) | NM | NM | 14.4 | NM | 14.5 | NM |
| ¹ Lap Shear Test B 1 | | | | | | |
| ² Lap Shear Test B2 | | | | | | |
| NM - not measured | | | | | | |

The polypropylene overmolded polymer metal hybrid articles disclosed in Table 6 all exhibit lap shear values of 5 or greater when the surface layer A comprises a polypropylene polymer. Comparative example C7A shows that when the skin layer is a polyamide (SL2), and the adhesive layer is AL1 (using FP1 which is polyethylene based), adhesion between the overmolded polypropylene polymer and surface layer A is very low.

Various metals may be used as metal layer C as shown by the examples in Table 7. For Table 7, surface layer A comprises PA610/6T, adhesive layer B is AL4, and the overmolding polymer is the same PA66 composition used for Tables 3 and 4. Table 7 shows that various metals may be used in the polymer-metal hybrid articles to obtain initial lap shear values of at least 7.5 when polyamide polymers are used as the surface layer A and the overmolding polymer.

**Table 7**

| Metal | Lap Shear (test B 1) (MPa) |
|---|---|
| Aluminum | 9.5 |
| Carbon Steel | 8.8 |
| Stainless Steel | 8.5 |
| Brass | 7.6 |

Tables 8 to 10 disclose the physical properties of various overmolded polymer-metal hybrid articles disclosed herein.

Table 8 disclose lap shear values of polymer-metal hybrid articles which have been overmolded with PA2 and exposed to 70 % relative humidity (RH) and 60 °C for 1000 hrs. After relative humidity exposure, the samples were tested for lap shear. Lap shear values obtained at 0 hours were before RH exposure and at 23 °C.

**Table 8**

| Ingredients | E14 | E15 | E16 | E17 | E18 | E19 | C8 | E20 |
|---|---|---|---|---|---|---|---|---|
| AL | AL1 | AL4 | AL13 | AL6 | AL11 | AL12 | AL4 | AL13 |
| SL | SL2 | SL2 | SL2 | SL2 | SL2 | SL2 | none | SL4 |

| Physical Pro perties | | | | | | | | |
|---|---|---|---|---|---|---|---|---|
| Initial lap shear¹ (0 hrs.) | 9.3 | 11.4 | 13.7 | 15.5 | 14.6 | 15.0 | 7.2 | 10.3 |
| Lap Shear¹ (1000 hrs) | 8.1 | 9.9 | 10.1 | 12.5 | 9.8 | 9.8 | 4.3 | 7.7 |
| ¹Lap Shear Test B1; MPa | | | | | | | | |

The results in table 8 clearly show the advantage of the presence of surface layer A and adhesive layer B in the polymer-metal hybrid articles. C8, which does not comprise surface layer A, exhibits an initial lap shear (0 hrs.) of less than 7.5 MPa and a significant drop in lap shear after 1000 hrs. of RH exposure to 4.3. Examples E14 to E20 exhibit desirable initial adhesion values of at least 7.5 MPa after 1000 hrs. of RH exposure.

Examples E16 and E20 comprise the same thermoplastic adhesive layer B (AL13) but a different surface layer A. E16 comprises PA610/6T as surface layer A. E20 comprises PA66 as surface layer A. E16 exhibits superior initial adhesion values compared to E20 as well as superior lap shear values after 1000 hrs. RH exposure showing an advantage of a surface layer comprising a long chain polyamide. The composition of surface layer A can have a direct effect on the physical properties of overmolded polymer-metal hybrid articles.

Table 9 disclose physical properties of polymer-metal hybrid articles disclosed herein having the dimensions and shape as defined in "3-Point Flex Bar Testing" and which have been overmolded in an identical manner with PA2.

**Table 9**

| Ingredients | C9 | E21 | E22 | E23 | E24 |
|---|---|---|---|---|---|
| AL | none | AL1 | AL1 | AL4 | AL4 |
| SL | none | SL2 | SL2 | SL2 | SL2 |

| Physical Pro perties | | | | | |
|---|---|---|---|---|---|
| Mechanical Interlocked | yes | no | yes | no | Yes |
| Initial Flexural Modulus (23 °C) (MPa) | 10021 | 16640 | 15269 | 14437 | 14432 |
| Flexural Modulus¹ (23 °C) (MPa) | 9790 | NM | 15137 | NM | 14301 |
| Flexural Modulus² (23 °C) (MPa) | 8895 | NM | 14511 | NM | 13813 |
| Initial Flexural Modulus (85 °C) (MPa) | 5367 | NM | 8292 | NM | 7571 |
| Initial Spring Stiffness (N/mm) | 994 | 1649 | 1514 | 1431 | 1431 |
| Spring Stiffness³ (N/mm) | 971 | NM | 1502 | NM | 1419 |
| Spring Stiffness⁴ (N/mm) | 883 | NM | 1440 | NM | 1370 |
| Initial Spring Stiffness (85 °C) (N/mm) | 532 | NM | 823 | NM | 751 |
| ^{1,3} Thermally Cycled before testing | | | | | |
| ^{2,4} Tested after 1000 hrs. humidity exposure | | | | | |
| NM - not measured | | | | | |

C9 comprises metal layer C which has been directly overmolded and does not comprise layers A or B and is mechanically interlocked. E21 and E22 are identical except E21 does not comprise mechanical interlocking whereas E22 is mechanically interlocked. E23 and E24 are identical except E23 does not comprise mechanical interlocking whereas E24 is mechanically interlocked. All of the examples E21 to E24 exhibit at least a 42 percent, and up to 64 percent, improvement in flexural modulus compared to C9 regardless of whether or not mechanical interlocking is used. E21 to E24 also show that the composition of thermoplastic adhesive layer B has a direct influence on the flexural modulus of polymer-metal hybrid articles. Metal layer C used for all examples and comparative examples in Table 9 had identical dimensions (shape) and thickness.

The spring stiffness values in Table 9 also show that examples E21 to E24 exhibit at least a 42 percent, and up to 64 percent improvement in spring stiffness compared to C9 regardless of whether or not mechanical interlocking is used. Flexural modulus and spring stiffness results show proportionally similar changes in the polymer metal hybrid articles.

Table 10 discloses physical properties of polymer-metal hybrid articles disclosed herein having the dimensions and shape as defined in "3-Point Flex Bar Testing" and which have been overmolded with NFP-14 (homopolypropylene)

**Table 10**

| Ingredients | C10 | E25 | E26 |
|---|---|---|---|
| AL | None | AL4 | AL4 |
| SL | None | SL5 | SL5 |
| Mechanical Interlocked | Yes | No | Yes |
| Initial Flexural Modulus (23 °C) (MPa) | 7148 | NM | 9999 |
| Flexural Modulus¹ (23 °C) (MPa) | 6605 | NM | 9265 |
| Flexural Modulus² (23 °C) (MPa) | 6620 | NM | 9692 |
| Initial Flexural Modulus (85 °C) (MPa) | 4311 | NM | 5538 |
| Initial Spring Stiffness (85 °C) (N/mm) | 709 | NM | 990 |
| Spring Stiffness³ (85 °C) (N/mm) | 655 | NM | 919 |
| Spring Stiffness⁴ (85 °C) (N/mm) | 657 | NM | 692 |
| Initial Spring Stiffness (85 °C) (N/mm) | 428 | NM | 549 |
| ^{1,3} Thermally Cycled before testing | | | |
| ^{2,4} Tested after 1000 hrs. humidity exposure | | | |
| NM - not measured | | | |

C10 comprises metal layer C which has been directly overmolded and does not comprise layers A or B and is mechanically interlocked. E26 shows that mechanically interlocked test samples which comprise polymer metal-hybrid articles having an A/B/C structure are overmolded in an identical manner to C10, the improvement in flex modulus is 56 percent. E25, which does not comprise mechanical interlocks, exhibits an improvement in flexural modulus of 61 percent. Metal layer C used for all examples and comparative examples in Table 10 had identical dimensions (shape) and thickness. These results clearly show that polymer-metal hybrid articles as disclosed herein, provide improved flexural modulus compared to identically prepared articles which do not comprise an A/B/C structure whether mechanical interlocking is used or not.

The spring stiffness values in Table 10 also show that examples E25 and E26 exhibit at least a 56 percent improvement in spring stiffness compared to C10 which does not comprise surface layer A and thermoplastic adhesive layer B.

Table 11 shows the composition of adhesive layers B (AL) used in Tables 12 and 13. Surface layers A (SL) are the same as those used in tables 3 to 10. The polymer-metal hybrid articles used for testing in tables 12 and 13 were overmolded with polyamide PA2 and tested for lap shear using test B2 according to ASTM D3163

**Table 11**

| Ingredients | AL17 | AL18 | AL19 | AL20 | AL21 | AL22 | AL23 | AL24 | AL25 | AL26 |
|---|---|---|---|---|---|---|---|---|---|---|
| NFP-5 | | | | | | | 80 | 30 | | |
| NFP-7 | | | | | 90 | | | | 70 | 30 |
| NFP-9 | 90 | 70 | 30 | | | | | | | |
| FP-1 | 10 | 30 | 70 | 100 | | | | | | |
| FP-3 | | | | | 10 | | | | | |
| FP-5 | | | | | | 100 | 20 | 70 | 30 | 70 |
| AO-1 | | | | | | | | | | |
| Physical Properties | | | | | | | | | | |
| TOTAL NFP (wt.%) | 90 | 70 | 30 | 0 | 90 | 0 | 80 | 30 | 70 | 30 |
| wt. % grafting level | | | | | 0.14 | 0.6 | 0.12 | 0.42 | 0.18 | 0.42 |

**Table 12**

| Ingredients | C11 | E27 | E28 | E29 | E30 |
|---|---|---|---|---|---|
| AL | AL20 | AL17 | AL18 | AL19 | AL1 |
| SL | SL2 | SL2 | SL2 | SL2 | SL2 |

| Physical Pro perties | | | | | |
|---|---|---|---|---|---|
| Initial Lap Shear (23°C) | 11.8 | 11.6 | 13.5 | 11.6 | 10 |
| Initial Lap Shear (85°C) | 3.3 | 3.8 | 4.1 | 3.6 | 5.2 |
| Lap Shear (1000 hrs)^{∗} | 12.1 | 11.5 | 12.5 | 12.1 | 11.2 |
| Lap Shear (thermally cycled) | 11.8 | 12.4 | 12.9 | 11.8 | 11.5 |

Table 12 shows the results for overmolded PMH articles in which the functionalized polyolefin is prepared from high density polyethylene (FP1). C11 comprises an adhesive layer B which is 100% FP1 and does not comprise a nonfunctionalized thermoplastic polyolefin. Examples E27 to E30 comprise a functionalized high density polyethylene homopolymer and a nonfunctionalized thermoplastic polyolefin. E27 to E30 do not exhibit a minimum initial lap shear at 85 °C of at least 5.5 MPa and are undesirable for high temperature applications.

**Table 13**

| Ingredients | C11 | C12 | C13 | C14 | E31 | E32 |
|---|---|---|---|---|---|---|
| AL | AL22 | AL21 | AL23 | AL24 | AL25 | AL26 |
| SL | SL2 | SL2 | SL2 | SL2 | SL2 | SL2 |

| Physical Pro perties | | | | | | |
|---|---|---|---|---|---|---|
| Initial lap Shear (23°C) | 8.4 | 3.4 | 9.9 | 2.6 | 18.1 | 17.5 |
| Initial lap Shear (85°C) | 5.2 | 1.0 | 5.6 | 1.5 | 8.4 | 8.7 |
| Lap Shear (1000 hrs)^{∗} | 5.8 | 2.8 | 6.3 | 1.9 | 16.1 | 12.8 |
| Lap Shear (thermally-cycled) | 3.7 | 2.6 | 5.3 | 0.5 | 14.8 | 10.9 |

Table 13 shows the physical properties of various overmolded polymer-metal hybrid articles. C11 only comprises a functionalized thermoplastic polyolefin and no nonfunctionalized thermoplastic polyolefin. C12 only comprises 10 weight percent of a functionalized thermoplastic polyolefin. C13 and C14 comprise only a propylene homopolymer as the nonfunctionalized thermoplastic polyolefin. C12 to C14 all fail to exhibit the desired initial adhesion, high temperature adhesion, moisture resistance, and thermal stability. Examples E31 and E32 which comprise the desired concentrations of functionalized thermoplastic polyolefin and nonfunctionalized thermoplastic polyolefin exhibit an initial adhesion of at least 11.5 MPa, a high temperature adhesion of at least 5.5 MPa, a moisture resistance as measured by a lap shear of at least 9 MPa, and a thermal stability as measured by a lap shear of at least 11.5 MPa.

## Claims

1. An overmolded polymer-metal hybrid article comprising:
A) a surface layer comprising:
A1) a polyamide;
B) a thermoplastic adhesive layer comprising:
B1) from about 25 to 75 weight percent of at least one nonfunctionalized thermoplastic polyolefin having a melting point of from about 80 to 200 °C;
B2) from about 75 to 25 weight percent of at least one functionalized thermoplastic polyolefin comprising from 0.02 to 10 weight percent of a carboxyl
functional group;
wherein the weight percent of (B1) and (B2) is based on the sum of the weight percent of (B1) and (B2) and thermoplastic adhesive layer B comprises a carboxyl functional group content of 0.02 to 1.5 weight percent based on the total weight percent of (B1) and (B2) in thermoplastic adhesive layer B when measured by ASTM E168;
C) a metal layer; and
D) a polyamide overmolded onto at least a part of surface layer A;
wherein:
layers A, B, and C are interlayered into an A/B/C structure;
said overmolded polymer-metal hybrid article exhibits an initial adhesion of at least 11.5 MPa when measured at 23 °C according to ASTM D3163 using lap shear test B.

2. The overmolded polymer-metal hybrid article of claim 1 which additionally exhibits a high temperature adhesion of at least 5.5 MPa when measured at 85 °C according to ASTM D3163 using lap shear test B and/or which additionally exhibits a lap shear after 1000 hrs humidity testing at 70 % relative humidity (RH) and 60 °C of at least 9.0 MPa when measured at 23 °C according to ASTM D3163 using lap shear test B.

3. The overmolded polymer-metal hybrid article of claim 1 which additionally exhibits a lap shear of at least 11.5 MPa after 40 thermal cycles from minus 35 °C to plus 85 °C when measured at 23 °C according to ASTM D3163 using lap shear test B, and/or wherein thermoplastic adhesive layer B comprises a total carboxyl functional group content of 0.02 to 1 wt. percent, preferably wherein thermoplastic adhesive layer B comprises a total carboxyl functional group content of 0.02 to 0.5 wt. percent.

4. The overmolded polymer-metal hybrid article of claim 1 wherein the at least one nonfunctionalized thermoplastic polyolefin B1 is selected from the group consisting of ethylene/C3 to C8 α-olefin copolymers, ethylene/propylene/diene copolymers, polystyrene, polypropylene homopolymers, polypropylene copolymers, polyethylene homopolymers, low density polyethylene, and combinations of these; with the proviso that when polypropylene homopolymers are present as a nonfunctionalized thermoplastic polyolefin B1, at least 20 weight percent of one additional nonfunctionalized thermoplastic polyolefin B is present based on the total weight of nonfunctionalized thermoplastic polyolefin B1.

5. The overmolded polymer-metal hybrid article of claim 1 wherein functionalized thermoplastic polyolefin B2 is selected from the group consisting of maleic anhydride grafted homopolymer high density polyethylenes, maleic anhydride grafted homopolymer polypropylenes, maleic anhydride grafted propylene/ethylene copolymers, and combinations of these.

6. The overmolded polymer-metal hybrid article of claim 1 wherein metal layer C is selected from the group consisting of aluminum, stainless steel, carbon steel, brass, copper, and alloys of these.

7. The overmolded polymer-metal hybrid article of claim 1 wherein polyamide A1 is selected from the group consisting of PA6, PA66, PA610/6T, PA612/6T, PA610, PA612, PA1010, PA6/66, PA 510/5T, PA 512/5T, PA66/6T, PA6T/DT, PA6I/6T, PA6T/6I, PA6T/610, PA6T/612, and combinations of these.

8. The overmolded polymer-metal hybrid article of claim 1 having an initial lap shear which is at least 10 percent greater than an identical overmolded polymer-metal hybrid article but which does not comprise surface layer A when measured according to ASTM D3163 at 23 °C and or wherein the overmolded polymer-metal hybrid article has an initial flexural modulus which is at least 10 percent greater than an identical overmolded polymer-metal hybrid article but which does not comprise surface layer A and thermoplastic adhesive layer B when measured according to ISO 178 using mechanically interlocked test samples and/or
wherein the overmolded polymer-metal hybrid article, when heat cycled from -35 to 85 °C for 40 cycles, exhibits an improvement in lap shear of at least 10 percent compared to an identical overmolded polymer-metal hybrid article but which does not comprise surface layer A when measured according to ASTM D3163 and/or
wherein the overmolded polymer-metal hybrid article, when exposed to 70 % relative humidity and 60 °C for 1000 hours, exhibits an improvement in lap shear of at least 10 percent compared to an identical overmolded polymer-metal hybrid article but which does not comprise surface layer A when measured according to ASTM D3163.

9. The overmolded polymer-metal hybrid article of claim 1 in the form of an automotive cross-car beam, roof structure, front end modules, lift-gates, consumer electronic devices, cell phones, and computers.

10. A process for preparing polymer-metal hybrid articles of claim 1 comprising the step of:
a) laminating thermoplastic adhesive layer B and surface layer A onto a metal layer C using sufficient temperature and pressure to form a polymer-metal hybrid article having an A/B/C structure.

11. A process for preparing overmolded polymer-metal hybrid articles of claim 1 comprising the steps of:
a) placing a polymer-metal hybrid article having layers in an A/B/C structure into a heated mold on a molding machine with layer A facing outward;
b) closing the heated mold and allowing the polymer-metal hybrid article to be heated until the T_{g} of layer A is reached;
c) injecting into the heated mold an overmolding polymer onto layer A of the polymer-metal hybrid article to form an overmolded polymer-metal hybrid article in which 90 percent or less of layer A is overmolded;
d) allowing the overmolded polymer-metal hybrid article to cool and solidify;
e) opening the mold and removing the overmolded polymer-metal hybrid article;
wherein after 50 repetitions of steps (a) to (e) the total mold deposits are 50 percent less than the total mold deposits of an identical process using a polymer-metal hybrid article lacking layer A.

12. The process of claim 11 wherein in step (c), 80 percent or less of layer A is overmolded, preferably wherein in step (c), 50 percent or less of layer A is overmolded.

13. The process of claim 11 wherein the overmolding polymer of step (c) is selected from polyamides and polypropylene polymers and/or
wherein after 50 repetitions of steps (a) to (e) the total mold deposits are 90 percent less than the total mold deposits of an identical process using a polymer-metal hybrid article lacking layer A.

14. The overmolded polymer-metal hybrid article of claim 1 wherein:
said overmolded polymer-metal hybrid article furthermore exhibits a high temperature adhesion of at least 5.5 MPa when measured at 85 °C, a lap shear after 1000 hrs humidity testing at 70 % relative humidity (RH) and 60 °C of at least 9.0 MPa when measured at 23 °C, and a lap shear of at least 11.5 MPa after 40 thermal cycles from minus 35 °C to plus 85 °C when measured at 23 °C;
wherein all lap shear values were determined according to ASTM D3163 using lap shear test B; and
with the proviso that thermoplastic adhesive layer B does not comprise a functionalized thermoplastic polyolefin B2 derived from a polyethylene homopolymer; and
with the proviso that nonfunctionalized thermoplastic polyolefin B2 comprises 80 percent or less of a polypropylene homopolymer.

15. A polymer-metal hybrid article comprising:
a surface layer A comprising:
A1. a polyamide or polypropylene;
a thermoplastic adhesive layer B comprising:
B1. at least 50 wt. percent of a nonfunctionalized thermoplastic polyolefin having a melting point of from about 80 to 200 °C;
B2. less than 50 wt. percent of a functionalized thermoplastic polyolefin
comprising from 0.02 to 10 weight percent of a carboxyl functional group;
wherein the weight percent of (B1) and (B2) is based on the sum of the weight percent of (B1) and (B2) and thermoplastic adhesive layer B comprises a carboxyl functional group content of 0.02 to 1.5 wt. percent based on the total weight percent of (B1) and (B2) in thermoplastic adhesive layer B when measured by ASTM E168; and
a metal layer C;
wherein:
layers A, B, and C are interlayered into an A/B/C structure; and
said thermoplastic adhesive layer B exhibits a lap shear of at least 4 MPa to aluminum when measured at 23 °C according to ASTM D3163 using an Aluminum/B/Aluminum test sample.

## Patentansprüche

1. Überspritzter Polymer-Metall-Hybridartikel umfassend:
A) eine Oberflächenschicht umfassend:
A1) ein Polyamid;
B) eine thermoplastische Klebstoffschicht umfassend:
B1) von etwa 25 bis 75 Gewichtsprozent mindestens eines nichtfunktionalisierten thermoplastischen Polyolefins, das einen Schmelzpunkt von etwa 80 bis 200 °C aufweist;
B2) von etwa 75 bis 25 Gewichtsprozent mindestens eines funktionalisierten thermoplastischen Polyolefins, das von 0,02 bis 10 Gewichtsprozent einer carboxylfunktionellen Gruppe umfasst,
wobei der Gewichtsprozentsatz von (B1) und (B2) auf die Summe des Gewichtsprozentsatzes von (B1) und (B2) basiert und die thermoplastische Klebstoffschicht B einen Gehalt carboxylfunktioneller Gruppe von 0,02 bis 1,5 Gewichtsprozent, auf den Gesamtgewichtsprozentsatz von (B1) und (B2) in der thermoplastischen Klebstoffschicht B bezogen, umfasst, wenn er ASTM E168 entsprechend gemessen wird;
C) eine Metallschicht; und
D) ein Polyamid, das auf mindestens einen Teil der Oberflächenschicht A überspritzt ist;
wobei:
die Schichten A, B und C in eine A/B/C-Struktur geschichtet sind;
der überspritzte Polymer-Metall-Hybridartikel eine anfängliche Haftung von mindestens 11,5 MPa aufweist, wenn sie bei 23 °C ASTM D3163 entsprechend unter Anwendung eines Zugschertests B gemessen wird.

2. Überspritzter Polymer-Metall-Hybridartikel nach Anspruch 1, der zusätzlich eine Hochtemperaturhaftung von mindestens 5,5 MPa aufweist, wenn sie bei 85 °C ASTM D3163 entsprechend unter Anwendung des Zugschertests B gemessen wird und/oder der zusätzlich einen Zugscherwert nach 1000 h Feuchtigkeitstesten bei 70 % relativer Feuchte (RF) und 60 °C von mindestens 9,0 MPa aufweist, wenn er bei 23 °C ASTM D3163 entsprechend unter Anwendung des Zugschertests B gemessen wird.

3. Überspritzter Polymer-Metall-Hybridartikel nach Anspruch 1, der zusätzlich einen Zugscherwert von mindestens 11,5 MPa nach 40 Wärmezyklen von minus 35 °C bis plus 85 °C aufweist, wenn er bei 23 °C ASTM D3163 entsprechend unter Anwendung eines Zugschertests B gemessen wird, und/oder wobei die thermoplastische Haftschicht B einen Gesamtgehalt an carboxylfunktioneller Gruppe von 0,02 bis 1 Gew.-% umfasst, wobei bevorzugt die thermoplastische Klebstoffschicht B einen Gesamtgehalt an carboxylfunktioneller Gruppe von 0,02 bis 0,5 Gew.-% umfasst.

4. Überspritzter Polymer-Metall-Hybridartikel nach Anspruch 1, wobei das mindestens eine nichtfunktionalisierte thermoplastische Polyolefin B1 aus der Gruppe ausgewählt ist bestehend aus Ethylen-C3- bis C8-α-Olefincopolymeren, Ethylen-Propylen-Dien- Copolymeren, Polystyrol, Polypropylenhomopolymeren, Polypropylencopolymeren, Polyethylenhomopolymeren, Polyethylen niedriger Dichte und Kombinationen dieser; mit der Maßgabe, dass, wenn Polypropylenhomopolymere als nichtfunktionalisiertes thermoplastisches Polyolefin B1 vorliegen, mindestens 20 Gewichtsprozent eines zusätzlichen nichtfunktionalisierten thermoplastischen Polyolefins B1, auf das Gesamtgewicht von nichtfunktionalisiertem thermoplastischem Polyolefin B1 bezogen, vorliegen.

5. Überspritzter Polymer-Metall-Hybridartikel nach Anspruch 1, wobei das funktionalisierte thermoplastische Polyolefin B2 aus der Gruppe ausgewählt ist bestehend aus Maleinsäureanhydrid-gepfropften Homopolymer-Polyethylenen hoher Dichte, Maleinsäureanhydrid-gepfropften Homopolymer-Polypropylenen, Maleinsäureanhydrid-gepfropften Propylen-Ethylen-Copolymeren und Kombinationen dieser.

6. Überspritzter Polymer-Metall-Hybridartikel nach Anspruch 1, wobei die Metallschicht C aus der Gruppe ausgewählt ist bestehend aus Aluminium, Edelstahl, Kohlenstoffstahl, Messing, Kupfer und Legierungen dieser.

7. Überspritzter Polymer-Metall-Hybridartikel nach Anspruch 1, wobei das Polyamid A1 aus der Gruppe ausgewählt ist bestehend aus PA6, PA66, PA 610/6T, PA 612/6T, PA610, PA612, PA1010, PA6/66, PA 510/5T, PA 512/5T, PA66/6T, PA6T/DT, PA61/6T, PA6T/61, PA6T/610, PA6T/612 und Kombinationen dieser.

8. Überspritzter Polymer-Metall-Hybridartikel nach Anspruch 1, der einen anfänglichen Zugscherwert aufweist, der mindestens 10 Prozent höher ist als derjenige eines identischen überspritzten Polymer-Metall-Hybridartikels, der jedoch keine Oberflächenschicht A umfasst, wenn er ASTM D3163 entsprechend bei 23° C gemessen wird und/oder wobei der überspritzte Polymer-Metall-Hybridartikel einen anfänglichen Biegemodul aufweist, der mindestens 10 Prozent höher ist als derjenige eines identischen überspritzten Polymer-Metall-Hybridartikels, der jedoch keine Oberflächenschicht A und thermoplastische Haftschicht B umfasst, wenn er ISO 178 unter Anwendung mechanisch verzahnter Testproben gemessen wird und/oder
wobei der überspitzte Polymer-Metall-Hybridartikel, wenn er Wärmezyklus von - 35 bis 85 °C über 40 Zyklen ausgesetzt wird, eine Verbesserung des Zugscherwerts von mindestens 10 Prozent, im Vergleich mit einem identischen überspritzten Polymer-Metall-Hybridartikel aufweist, der jedoch keine Oberflächenschicht A aufweist, wenn er ASTM D3163 entsprechend gemessen wird und/oder
wobei der überspritzte Polymer-Metall-Hybridartikel, wenn er 70 % relativer Feuchte und 60 °C 1000 Stunden lang ausgesetzt wird, eine Verbesserung des Zugscherwerts von mindestens 10 Prozent im Vergleich mit einem identischen überspritzten Polymer-Metall-Hybridartikel aufweist, der jedoch keine Oberflächenschicht A umfasst, wenn er ASTM D3163 entsprechend gemessen wird.

9. Überspritzter Polymer-Metall-Hybridartikel nach Anspruch 1 in Form eines Automobilquerbalkens, einer Dachstruktur, von Vorderendmodulen, Hubtoren, elektronischen Konsumvorrichtungen, Handys und Computern.

10. Verfahren zum Herstellen von Polymer-Metall-Hybridartikeln nach Anspruch 1, umfassend den Schritt des:
a) Laminierens einer thermoplastischen Klebstoffschicht B und Oberflächenschicht A auf eine Metallschicht C unter Anwendung ausreichender Temperatur und ausreichendem Druck, um einen Polymer-Metall-Hybridartikel zu bilden, der eine A/B/C-Struktur aufweist.

11. Verfahren zum Herstellen von überspritzten Polymer-Metall-Hybridartikeln nach Anspruch 1, umfassend die Schritte des:
a) Positionierens eines Polymer-Metall-Hybridartikels, der Schichten in einer A/B/C-Struktur aufweist, in eine erhitzte Form auf einer Formmaschine, wobei die Schicht A nach außen zugewandt ist;
b) Schließens der erhitzten Form und Gestatten dem Polymer-Metall-Hybridartikel, erhitzt zu werden, bis die T_{g} der Schicht A erreicht wird;
c) Einspritzens, in die erhitzte Form, eines Überspritzungspolymers auf die Schicht A des Polymer-Metall-Hybridartikels, um einen überspritzten Polymer-Metall-Hybridartikel zu bilden, in dem 90 % oder weniger der Schicht A überspitzt sind;
d) Gestattens dem überspritzten Polymer-Metall-Hybridartikel, sich abzukühlen und sich zu verfestigen;
e) Öffnens der Form und Entfernen des überspritzten Polymer-Metall-Hybridartikels;
wobei, nach 50 Wiederholungen der Schritte (a) bis (e), die gesamten Formablagerungen 50 % geringer sind als die gesamten Formablagerungen eines identischen Verfahrens unter Anwendung eines Polymer-Metall-Hybridartikels, dem die Schicht A fehlt.

12. Verfahren nach Anspruch 11, wobei in Schritt (c), 80 Prozent oder weniger der Schicht A überspitzt werden, wobei bevorzugt in Schritt (c), 50 Prozent oder weniger der Schicht A überspitzt werden.

13. Verfahren nach Anspruch 11, wobei das Überspritzsungspolymer aus Schritt (c ) unter Polyamiden und Polypropylenpolymeren ausgewählt wird und/oder
wobei nach 50 Wiederholungen der Schritte (a) bis (e), die gesamten Formablagerungen 90 Prozent geringer sind als die gesamten Formablagerungen eines identischen Verfahrens unter Anwendung eines Polymer-Metall-Hybridartikels, dem die Schicht A fehlt.

14. Überspritzter Polymer-Metall-Hybridartikel nach Anspruch 1, wobei:
der überspritzte Polymer-Metall-Hybridartikel ferner eine Hochtemperaturhaftung von mindestens 5,5 MPa, wenn sie bei 85 °C gemessen wird, einen Zugscherwert nach 1000 h Feuchtigkeitstesten bei 70 % relativer Feuchte (RF) und 60 °C von mindestens 9,0 MPa, wenn er bei 23 °C gemessen wird, und einen Zugscherwert von mindestens 11,5 MPa nach 40 Wärmezyklen von minus 35 °C bis plus 85 °C, wenn er bei 23 °C gemessen wird, aufweist;
wobei alle Zugscherwerte ASTM D3163 entsprechend unter Anwendung des Zugschertests B bestimmt wurden; und
mit der Maßgabe, dass die thermoplastische Klebstoffschicht B kein funktionalisiertes thermoplastisches Polyolefin B2 umfasst, das von einem Polyethylenhomopolymer abgeleitet ist; und
mit der Maßgabe, dass nichtfunktionalisiertes thermoplastisches Polyolefin B2 80 Prozent oder weniger eines Polypropylenhomopolymers umfasst.

15. Polymer-Metall-Hybridartikel umfassend:
eine Oberflächenschicht A umfassend:
A1. ein Polyamid oder Polypropylen;
eine thermoplastische Klebstoffschicht B umfassend:
B1. mindestens 50 Gew.-% eines nichtfunktionalisieren thermoplastischen Polyolefins, das einen Schmelzpunkt von etwa 80 bis 200 °C aufweist;
B2. weniger als 50 Gew.-% eines funktionalisierten thermoplastischen Polyolefins, das 0,02 bis 10 Gewichtsprozent einer carboxylfunktionellen Gruppe umfasst;
wobei der Gewichtsprozentsatz von (B1) und (B2) auf die Summe des Gewichtsprozentsatzes von (B1) und (B2) basiert und die thermoplastische Klebstoffschicht B einen Gehalt an carboxylfunktioneller Gruppe von 0,02 bis 1,5 Gewichtsprozent, auf den Gesamtgewichtsprozentsatz von (B1) und (B2) in der thermoplastischen Klebstoffschicht B bezogen, umfasst, wenn er ASTM E168 entsprechend gemessen wird; und
eine Metallschicht C;
wobei:
die Schichten A, B und C in eine A/B/C-Struktur geschichtet sind; und
die thermoplastische Klebstoffschicht B einen Zugscherwert von mindestens 4 MPa an Aluminium aufweist, wenn er bei 23 °C ASTM D3163 entsprechend unter Anwendung einer Aluminium/B/Aluminium-Testprobe gemessen wird.

## Revendications

1. Article surmoulé hybride polymère-métal comprenant :
A) une couche de surface comprenant :
A1) un polyamide ;
B) une couche adhésive thermoplastique comprenant :
B1) d'environ 25 à 75 pour cent en poids d'au moins une polyoléfine thermoplastique non fonctionnalisée ayant un point de fusion d'environ 80 à 200 °C ;
B2) d'environ 75 à 25 pour cent en poids d'au moins une polyoléfine thermoplastique fonctionnalisée comprenant de 0,02 à 10 pour cent en poids d'un groupe fonctionnel carboxyle ;
le pourcentage en poids de (B1) et (B2) étant basé sur la somme du pourcentage en poids de (B1) et de (B2) et la couche adhésive thermoplastique B comprenant une teneur en groupes fonctionnels carboxyle de 0,02 à 1,5 pour cent en poids sur la base du pourcentage en poids total de (B1) et de (B2) dans la couche adhésive thermoplastique B lorsque mesuré selon ASTM E168 ;
C) une couche métallique ; et
D) un polyamide surmoulé sur au moins une partie de la couche de surface A ;
dans lequel
les couches A, B, et C sont inter-stratifiées selon une structure A/B/C ;
ledit article surmoulé hybride polymère-métal fait preuve d'une adhésion initiale d'au moins 11,5 MPa lorsque mesurée à 23 °C selon ASTM D3163 en utilisant un test de cisaillement de recouvrement B.

2. Article surmoulé hybride polymère-métal selon la revendication 1 qui fait preuve de manière additionnelle d'une adhésion à température élevée d'au moins 5,5 MPa lorsque mesurée à 85 °C selon ASTM D3163 en utilisant le test de cisaillement de recouvrement B et/ou qui fait preuve de manière additionnelle d'un cisaillement de recouvrement après un test d'humidité de 1 000 heures à 70 % d'humidité relative (HR) et 60 °C d'au moins 9,0 MPa, lorsque mesuré à 23 °C selon ASTM D3163 en utilisant le test de cisaillement de recouvrement B.

3. Article surmoulé hybride polymère-métal selon la revendication 1 qui fait preuve de manière additionnelle d'un cisaillement de recouvrement d'au moins 11,5 MPa après 40 cycles thermiques de moins 35 °C à plus 85 °C lorsque mesuré à 23 °C selon ASTM D3163 en utilisant un test de cisaillement de recouvrement B, et/ou dans lequel la couche adhésive thermoplastique B comprend une teneur totale en groupes fonctionnels carboxyle de 0,02 à 1 pour cent en pds, préférablement dans lequel la couche adhésive thermoplastique B comprend une teneur totale en groupes fonctionnels carboxyle de 0,02 à 0,5 pour cent en pds.

4. Article surmoulé hybride polymère-métal selon la revendication 1, la au moins une polyoléfine thermoplastique non fonctionnalisée B1 étant sélectionnée dans le groupe constitué des copolymères d'éthylène/α-oléfine en C₃ à C₈, des copolymères d'éthylène/propylène/diène, du polystyrène, des homopolymères de polypropylène, des copolymères de polypropylène, des homopolymères de polyéthylène, du polyéthylène faible densité, et de combinaisons de ceux-ci ; à condition que lorsque les homopolymères de polypropylène sont présents comme polyoléfine thermoplastique non fonctionnalisée B1, au moins 20 pour cent en poids d'une polyoléfine thermoplastique non fonctionnalisée additionnelle B1 est présente sur la base du poids total de la polyoléfine thermoplastique non fonctionnalisée B1.

5. Article surmoulé hybride polymère-métal selon la revendication 1, la polyoléfine thermoplastique fonctionnalisée B2 étant sélectionnée dans le groupe constitué des polyéthylènes haute densité d'homopolymère greffé avec de l'anhydride maléique, des polypropylènes d'homopolymère greffé avec de l'anhydride maléique, des copolymères de propylène/éthylène greffés avec de l'anhydride maléique, et de combinaisons de ceux-ci.

6. Article surmoulé hybride polymère-métal selon la revendication 1, la couche métallique C étant sélectionnée dans le groupe constitué de l'aluminium, de l'inox, de l'acier au carbone, du bronze, du cuivre, et d'alliages de ceux-ci.

7. Article surmoulé hybride polymère-métal selon la revendication 1, le polyamide A1 étant sélectionné dans le groupe constitué du PA6, PA66, PA610/6T, PA612/6T, PA610, PA612, PA1010, PA6/66, PA510/5T, PA512/5T, PA66/6T, PA6T/DT, PA6I/6T, PA6T/6I, PA6T/610, PA6T/612, et de combinaisons de ceux-ci.

8. Article surmoulé hybride polymère-métal selon la revendication 1, ayant un cisaillement initial de recouvrement qui est au moins 10 pour cent supérieur à celui d'un article surmoulé hybride polymère-métal identique mais qui ne comprend pas de couche de surface A lorsque mesuré selon ASTM D3163 à 23 °C et/ou, l'article surmoulé hybride polymère-métal ayant un module de flexion initial qui est au moins 10 pour cent supérieur à celui d'un article surmoulé hybride polymère-métal identique mais qui ne comprend pas de couche de surface A et de couche adhésive thermoplastique B lorsque mesuré selon ISO 178 en utilisant des échantillons de test mécaniquement inter-stratifiés et/ou
l'article surmoulé hybride polymère-métal, lorsqu'il est chauffé par cycle de -35 à 85 °C durant 40 cycles, fait preuve d'une amélioration dans le cisaillement de recouvrement d'au moins 10 pour cent comparé à un article surmoulé hybride polymère-métal identique mais qui ne comprend pas de couche de surface A lorsque mesuré selon ASTM D3163 et/ou
l'article surmoulé hybride polymère-métal, lorsqu'il est exposé à une humidité relative de 70 % et 60 °C durant 1 000 heures, fait preuve d'une amélioration dans le cisaillement de recouvrement d'au moins 10 pour cent comparé à un article surmoulé hybride polymère-métal identique mais qui ne comprend pas de couche de surface A lorsque mesuré selon la norme ASTM D3163.

9. Article surmoulé hybride polymère-métal selon la revendication 1, sous la forme d'une poutre transversale de véhicule automobile, d'une structure de toit, de modules d'extrémité avant, de hayons, de dispositifs électroniques de grande distribution, de téléphones portables, et d'ordinateurs.

10. Procédé de préparation d'articles hybrides polymère-métal selon la revendication 1, comprenant l'étape de :
a) stratification d'une couche adhésive thermoplastique B et d'une couche de surface A sur une couche métallique C en utilisant une température et une pression suffisantes pour former un article hybride polymère-métal ayant une structure A/B/C.

11. Procédé de préparation d'articles surmoulés hybrides polymère-métal selon la revendication 1 comprenant les étapes de :
a) mise en place d'un article hybride polymère-métal ayant des couches dans une structure A/B/C dans un moule chauffé sur une machine de moulage avec la couche A orientée vers l'extérieur ;
b) fermeture du moule chauffé et le fait de laisser l'article hybride polymère-métal chauffer jusqu'à ce que la T_{g} de la couche A soit atteinte ;
c) injection, dans le moule chauffé, d'un polymère de surmoulage sur la couche A de l'article hybride polymère-métal pour former un article surmoulé hybride polymère-métal dans lequel 90 pour cent ou moins de la couche A est surmoulée ;
d) laisser l'article surmoulé hybride polymère-métal refroidir et se solidifier ;
e) ouvrir le moule et retirer l'article surmoulé hybride polymère-métal ;
après 50 répétitions des étapes (a) à (e) les dépôts de moule totaux étant 50 pour cent inférieurs aux dépôts de moule totaux d'un procédé identique utilisant un article hybride polymère-métal sans couche A.

12. Procédé selon la revendication 11, dans lequel, dans l'étape (c), 80 pour cent ou moins de la couche A est surmoulée, préférablement dans lequel, dans l'étape (c), 50 pour cent ou moins de la couche A est surmoulée.

13. Procédé selon la revendication 11, le polymère de surmoulage de l'étape (c) étant sélectionné parmi des polyamides et des polymères de polypropylène et/ou
dans lequel après 50 répétitions des étapes (a) à (e) les dépôts de moule totaux sont 90 pour cent inférieurs aux dépôts de moule totaux d'un procédé identique utilisant un article hybride polymère-métal sans couche A.

14. Article surmoulé hybride polymère-métal selon la revendication 1, dans lequel :
ledit article surmoulé hybride polymère-métal fait en outre preuve d'une adhésion à température élevée d'au moins 5,5 MPa lorsqu'elle est mesurée à 85 °C, d'un cisaillement de recouvrement après un test d'humidité de 1 000 heures à 70 % d'humidité relative (HR) et 60 °C d'au moins 9,0 MPa lorsqu'il est mesuré à 23 °C, et d'un cisaillement de recouvrement d'au moins 11,5 MPa après 40 cycles thermiques de moins 35 °C à plus 85 °C lorsqu'il est mesuré à 23 °C ;
dans lequel toutes les valeurs de cisaillement de recouvrement ont été déterminées selon ASTM D3163 en utilisant le test de cisaillement de recouvrement B ; et
à condition que la couche adhésive thermoplastique B ne comprenne pas de polyoléfine thermoplastique fonctionnalisée B2 dérivée d'un homopolymère de polyéthylène ; et
à condition que la polyoléfine thermoplastique non fonctionnalisée B2 comprenne 80 pour cent ou moins d'un homopolymère de polypropylène.

15. Article hybride polymère-métal comprenant :
une couche de surface A comprenant :
A1. un polyamide ou un polypropylène ;
une couche adhésive thermoplastique B comprenant :
B1. au moins 50 pour cent en pds d'une polyoléfine thermoplastique non fonctionnalisée ayant un point de fusion d'environ 80 à 200 °C ;
B2. moins de 50 pour cent en pds d'une polyoléfine thermoplastique fonctionnalisée comprenant de 0,02 à 10 pour cent en poids d'un groupe fonctionnel carboxyle ;
le pourcentage en poids de (B1) et (B2) étant basé sur la somme du pourcentage en poids de (B1) et (B2) et la couche adhésive thermoplastique B comprenant une teneur en groupes fonctionnels carboxyle de 0,02 à 1,5 pour cent en pds sur la base du pourcentage en poids total de (B1) et (B2) dans la couche adhésive thermoplastique B lorsqu'il est mesuré selon ASTM E168 ; et
une couche métallique C ;
dans lequel :
les couches A, B, et C sont inter-stratifiées en une structure A/B/C ; et
ladite couche adhésive thermoplastique B fait preuve d'un cisaillement de recouvrement d'au moins 4 MPa à l'aluminium lorsqu'il est mesuré à 23 °C selon ASTM D3163 en utilisant un échantillon de test d'aluminium/B/aluminium.
